(19) Europäisches Patentamt
European Patent Office
Office européen des brevets

(11) **EP 3 822 734 B1**

(12) **EUROPEAN PATENT SPECIFICATION**

(45) Date of publication and mention
of the grant of the patent:
**31.07.2024 Bulletin 2024/31**

(21) Application number: **19834537.3**

(22) Date of filing: **19.06.2019**

(51) International Patent Classification (IPC):
**G05D 3/00** *(2006.01)* **G05D 3/12** *(2006.01)*
**G05B 19/414** *(2006.01)*

(52) Cooperative Patent Classification (CPC):
**B65G 47/905; B25J 9/0093; B65G 47/917;**
**G05B 19/414;** G05B 2219/50233

(86) International application number:
**PCT/JP2019/024318**

(87) International publication number:
**WO 2020/012902 (16.01.2020 Gazette 2020/03)**

(54) **CONTROL DEVICE AND CONTROL METHOD**

STEUERUNGSVORRICHTUNG UND STEUERUNGSVERFAHREN

DISPOSITIF ET PROCÉDÉ DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.07.2018 JP 2018131411**

(43) Date of publication of application:
**19.05.2021 Bulletin 2021/20**

(73) Proprietor: **OMRON Corporation**
**Shiokoji-dori, Shimogyo-ku,**
**Kyoto-shi**
**Kyoto 600-8530 (JP)**

(72) Inventors:
• **SHIMAMURA, Tomonori**
  **Kizugawa-shi, Kyoto 619-0283 (JP)**

• **BIWAKI, Shu**
  **Kizugawa-shi, Kyoto 619-0283 (JP)**
• **SHIMAMURA, Junji**
  **Kizugawa-shi, Kyoto 619-0283 (JP)**

(74) Representative: **Becker, Eberhard**
**Becker Kurig & Partner**
**Patentanwälte mbB**
**Bavariastraße 7**
**80336 München (DE)**

(56) References cited:
**EP-B1- 1 057 083      JP-A- 2012 194 665**
**JP-A- 2015 125 586      JP-A- 2016 004 435**
**JP-A- 2018 079 537      JP-A- H0 683 417**
**JP-A- H10 277 791      US-A1- 2013 033 218**

## Description

BACKGROUND OF THE INVENTION

Field of the Invention

The invention relates to a control device which executes synchronization control in which an operation of a driven shaft is synchronized with respect to an operation of a main shaft in each control cycle, and a control method in the control device.

Description of Related Art

A programmable logic controller (referred to as "PLC" in the following), is formed by a plurality of units, such as a central processing unit (CPU) including a microprocessor that executes a user program and an input output (IO) unit responsible for signal input from an external switch or sensor and signal output to an external relay or actuator. The PLC executes control operation while exchanging data between these units via a PLC system bus and/or a field network in each user program execution cycle.

As the operation control over machines, equipment, etc., the motion control for controlling motor movement may be included. As a classic example of such motion control, an application that determines the position of a mechanical mechanism, such as a position-determining table or robot, is assumed.

In the motion control, as a normal operation process in which a main shaft and a driven shaft operate while maintaining some sort of relationship, a gear operation and a cam operation are adopted. The gear operation is a process that determines the command speed with respect to the driven shaft by multiplying the speed of the main shaft by a gear ratio, which is a predetermined ratio set in advance. The cam operation is a process that determines the command speed with respect to the driven shaft while appropriately changing the gear ratio by specifying the movement amount (displacement) of the driven shaft with respect to the position (phase) of the main shaft based on a cam table in each control cycle.

By executing the motion control, the driven shaft firstly chases the main shaft through the cam operation, and switches to the gear operation upon arriving at the start position of the gear operation to follow the main shaft while synchronizing with the operation of the main shaft based on a predetermined gear ratio. In the following, the cam operation is referred to as "chasing operation", and the gear operation is referred to as "synchronization operation". Concerning such synchronization between the main shaft and the driven shaft, various technologies have been proposed.

For example, Japanese Laid-open No. 2017-33345 discloses a technology for resolving a mechanical shock when the synchronization starts by gradually changing the synchronization magnification of the speed of the slave shaft with respect to the speed of the master shaft at the time of synchronizing the master shaft and the slave shaft.

In addition, Japanese Patent No. 5803337 discloses a technology for alleviating the impact applied to the driven shaft by generating a cam curve representing the speed of the driven shaft with respect to time displacement and making driven shaft to chase by using the generated cam curve.

Moreover, Japanese Patent No. 5325949 discloses a technology for reducing the synchronization error between the main shaft and the feeding shaft by generating an inversion correction amount that improves the followability of the inversion operation of the feeding shaft when the operation of the main shaft is inverted and adding the generated inversion correction amount to the speed command value with respect to the feeding shaft or an integrator of a speed control loop of the feeding shaft control unit in a tapping processing device which performs a topping processing operation by synchronously operating a main shaft motor and a feeding shaft motor.

US 2013/033218 A1 proposes a synchronous control apparatus capable of switching cam curves with ease and without delay. A cam curve storing unit stores a representation of a first cam curve and a representation of a second cam curve. Before switch-over of the cam curves, a control unit finds a position command value to a driven-side member, after the switch-over of the cam curves, the control unit finds the position command value, and in a switch-over period of the cam curves, the control unit finds the position command value to the driven-side member based on a value obtained by utilizing first data based on the first cam curve or a position of the driven shaft and second data based on the second cam curve to provide a weighted average at each control timing.

SUMMARY OF THE INVENTION

[Problems to be Solved by the Invention]

In actual use, in either of the chasing operation and the synchronization operation, the speed of the main shaft may change in a stepwise manner due to switching of the main shaft as the operation target or inversion of the operation direction of the main shaft. That is, at the time when the driven shaft follows the main shaft due to the chasing operation or the synchronization operation, the speed of the main shaft in operation may change drastically (not continuously). Accordingly, there is a concern that a mechanical impact may be applied to the driven shaft in operation.

The technologies disclosed in Japanese Laid-open No. 2017-33345 and Japanese Patent No. 5803337 both aim at suppressing the vibration generated in the driven shaft when the driven shaft starts the chasing operation from a stopped state, and do not consider to suppress the vibration generated in the driven shaft in the case where the speed of the main shaft changes in a stepwise manner when the main shaft and the driven shaft are in operation. The technology disclosed in Japanese Patent No. 5325949 aims at increasing the followability of the inversion operation of the feeding shaft when the operation of the main shaft is inverted, and does not consider to suppress the vibration generated in the driven shaft in the case where the speed of the main shaft changes in a stepwise manner in when the main shaft and the driven shaft are in operation, either.

The objective of the invention is to provide a technology for suppressing the vibration generated in the driven shaft in the case where the speed of the main shaft changes in a stepwise manner when the main shaft and the driven shaft are in operation in the control of synchronizing the operation of the driven shaft with respect to the operation of the main shaft.

[Means to Solve Problems]

The present invention is provided by the appended claims. The following disclosure serves a better understanding of the present invention. In the following description, any embodiments referred to and not falling within the scope of the appended claims are merely examples useful for the understanding of the invention. According to an embodiment of the disclosure, a control device synchronizing an operation of a driven shaft with respect to an operation of a main shaft is provided. The control device includes: an acquisition unit, acquiring a speed of the main shaft in each control interval; a storage unit, storing a plurality of characteristic data for specifying a movement amount of the driven shaft with respect to a position of the main shaft; a selection unit, selecting one characteristic data of the characteristic data; a calculation unit, calculating a speed commanded with respect to the driven shaft as a speed command value; and an output unit, outputting the speed command value calculated by the calculation unit to the driven shaft. The calculation unit calculates a speed obtained by multiplying the speed of the main shaft acquired by the acquisition unit by a predetermined ratio as the speed command value in a synchronization operation in which the operation of the driven shaft is synchronized with respect to the operation of the main shaft, and before the driven shaft arrives at a position where the synchronization operation starts, specifies the movement amount of the driven shaft based on a position of the main shaft calculated from the speed of the main shaft acquired by the acquisition unit and the characteristic data under selection by the selection unit, and calculates, as the speed command value, a speed specified based on the movement amount. In a case where the speed of the main shaft changes in a stepwise manner when the main shaft and the driven shaft are in operation, the selection unit specifies another characteristic data responsive to a speed change of the main shaft from the characteristic data stored in the storage unit, and switches the characteristic data under selection to the another characteristic data.

According to the disclosure, the synchronization operation of the driven shaft is performed by outputting, as the speed command value, the speed obtained by multiplying the speed of the main shaft acquired in each control interval by the predetermined ratio and outputting the speed command value to the driven shaft. In addition, the operation (chasing operation) of the driven shaft is performed until the main shaft and the driven shaft arrive at the position at which the synchronization operation starts by specifying the movement amount of the driven shaft based on the position of the main shaft calculated from the speed of the main shaft acquired in each control interval and the characteristic data under selection and outputting, as the speed command value, the speed specified based on the movement amount to the driven shaft. Here, in the case where the speed of the main shaft changes in a stepwise manner when the main shaft and the driven shaft are in operation, such as in the chasing operation or the synchronization operation, if the characteristic data under selection is used as it is, there is a concern that a suitable speed command value cannot be output to the driven shaft. However, according to the disclosure, in the case where the speed of the main shaft changes in a stepwise manner when the main shaft and the driven shaft are in operation, since the characteristic data under selection is switched to another characteristic data responsive to the speed change of the main shaft, a suitable speed command value can be output to the driven shaft. As a result, the vibration generated in the driven shaft can be suppressed.

In the above disclosure, as the main shaft, a first main shaft and a second main shaft operating at a speed in the stepwise manner different from the speed of the first main shaft are provided. The control device further includes a switching unit which switches the main shaft from the first main shaft to the second main shaft based on an external command. In a case where the main shaft is switched by the switching unit when the main shaft and the driven shaft are in operation, the selection unit switches the characteristic data under selection to another characteristic data responsive to the switching of the main shaft among the characteristic data.

According to the disclosure, since the main shaft can be switched according to the external command, the convenience of the user can be improved. In addition, since the characteristic data under selection is switched to the another characteristic data responsive to the switching of the main shaft, a suitable speed command value can be output to the driven shaft.

In the above disclosure, the control device further includes an inversion unit which inverts an operation direction of the main shaft based on an external command. In a case where the inversion unit inverts the main shaft when the main shaft and the driven shaft are in operation, the selection unit switches the characteristic data under selection to another characteristic data responsive to the inversion of the main shaft among the characteristic data.

According to the disclosure, since the operation direction of the main shaft can be inverted according to the external command, the convenience of the user can be improved. In addition, since the characteristic data under selection is switched to the another characteristic data responsive to the inversion of the main shaft, a suitable speed command value can be output to the driven shaft.

In the above disclosure, the acquisition unit acquires a speed commanded with respect to the main shaft or an actually measured speed of the main shaft.

According to the disclosure, since the command value or the actually measured value as the speed of the detection target can be detected in the control of the synchronization operation or the chasing operation, the control can be performed responsive to the situation.

According to the disclosure, the control device further includes a vibration detection unit which detects vibration of the main shaft. In a case where the vibration detection unit detects the vibration of the main shaft, the acquisition unit switches an acquisition target from the speed commanded with respect to the main shaft to the actually measured speed of the main shaft.

According to the disclosure, in the control of the synchronization operation or the chasing operation, in the case of the vibration of the main shaft is detected, since the acquisition target can be switched from the speed commanded with respect to the main shaft to the actually measured speed, the operation of the driven shaft is not affected by the vibration of the main shaft.

According to the disclosure, the characteristic data are data defined based on at least one of a data table, a linear expression, and a polynomial expression.

According to the disclosure the characteristic data can be defined in various forms, and the convenience of the user is improved.

In the above disclosure, the selection unit selects the characteristic data based on an inherent vibration frequency of the driven shaft calculated through a fast Fourier transform.

According to the disclosure, since the characteristic data is selected by taking into consideration the inherent vibration frequency of the driven shaft, the vibration generated in the driven shaft can be suppressed.

In the above disclosure, the control device further includes the filter processing unit which smooths the movement amount of the driven shaft in the case where the selection unit switches the characteristic data when the speed of the main shaft in operation changes in a stepwise manner before the driven shaft arrives at the position where the synchronization operation starts.

According to the disclosure, since the movement amount of the driven shaft in the switched characteristic data after the switching can be smoothed in the case where the characteristic data under selection is switched when the speed of the main shaft in operation changes in a stepwise manner, the movement amount of the driven shaft due to the switching of the characteristic data can be prevented from changing drastically.

According to another embodiment of the disclosure, a control method for a control device synchronizing an operation of a driven shaft with respect to an operation of a main shaft is provided. The control method includes: a step for acquiring a speed of the main shaft in each control interval; a step for storing a plurality of characteristic data for specifying a movement amount of the driven shaft with respect to a position of the main shaft; a step for selecting one characteristic data of the characteristic data; a step for calculating a speed commanded with respect to the driven shaft as a speed command value; and a step for outputting the speed command value calculated in the step of calculation to the driven shaft. In the calculation step, a speed is obtained, as the speed command value, by calculating through multiplying the speed of the main shaft acquired in the step of acquisition by a predetermined ratio in a synchronization operation in which the operation of the driven shaft is synchronized with respect to the operation of the main shaft, and before the driven shaft arrives at a position where the synchronization operation starts, the movement amount of the driven shaft is specified based on a position of the main shaft calculated from the speed of the main shaft acquired in the step of acquisition and the characteristic data under selection from the step of selection, and a speed specified based on the movement amount is calculated as the speed command value. In the step of selection, in a case where the speed of the main shaft changes in a stepwise manner when the main shaft and the driven shaft are in operation, another characteristic data responsive to a speed change of the main shaft is specified from the characteristic data stored in the step of storage, and the characteristic data under selection is switched to the another characteristic data.

According to the disclosure, the synchronization operation of the driven shaft is performed by outputting, as the speed command value, the speed obtained by multiplying the speed of the main shaft acquired in each control interval by the predetermined ratio and outputting the speed command value to the driven shaft. In addition, the operation (chasing operation) of the driven shaft is performed until the main shaft and the driven shaft arrive at the position at which the synchronization operation starts by specifying the movement amount of the driven shaft based on the position of the main shaft calculated from the speed of the main shaft acquired in each control interval and the characteristic data under selection and outputting, as the speed command value, the speed specified based on the movement amount to the driven shaft. Here, in the case where the speed of the main shaft changes in a stepwise manner when the main shaft and the driven shaft are in operation, such as in the chasing operation or the synchronization operation, if the characteristic data under selection is used as it is, there is a concern that a suitable speed command value cannot be output to the driven shaft. However, according to the disclosure, in the case where the speed of the main shaft changes in a stepwise manner when the main shaft and the driven shaft are in operation, since the characteristic data under selection is switched to another characteristic data responsive to the speed change of the main shaft, a suitable speed command value can be output to the driven shaft. As a result, the vibration generated in the driven shaft can be suppressed.

[Inventive Effects]

According to the invention, a technology for suppressing the vibration generated in the driven shaft in the case where the speed of the main shaft changes in a stepwise manner when the main shaft and the driven shaft are in operation in the control of synchronizing the operation of the driven shaft with respect to the operation of the main shaft can be provided.

BRIEF DESCRIPTION OF THE DRAWINGS

    FIG. 1 is a schematic view for illustrating an application example of a control device according to an embodiment.
    FIG. 2 is a schematic view for visually outlining motion control.
    FIG. 3 is a timing chart showing speed changes of a main shaft and a driven shaft in a case where the main shaft is switched.
    FIG. 4 is a timing chart showing speed changes of a main shaft and a driven shaft in a case where the main shaft is inverted.
    FIG. 5 is a timing chart showing speed changes of a main shaft and a driven shaft in a case where the main shaft is inverted.
    FIG. 6 is a schematic diagram illustrating a schematic configuration of a PLC system.
    FIG. 7 is a schematic diagram illustrating a hardware configuration of a CPU unit.
    FIG. 8 is a schematic diagram illustrating a software configuration executed by a CPU unit.
    FIG. 9 is a schematic diagram illustrating a functional configuration of a control device.
    FIG. 10 is a schematic view for illustrating switching of a main shaft.
    FIG. 11 is a timing chart for illustrating vibration detection of a main shaft.
    FIG. 12 is a graph for illustrating a cam curve.
    FIG. 13 is a diagram illustrating a data structure of a cam table.
    FIG. 14 is a schematic view for illustrating switching of a cam curve.
    FIG. 15 is a flowchart showing a switching process in a chasing operation executed by a control device.
    FIG. 16 is a flowchart showing a switching process in a synchronization operation executed by a control device.
    FIG. 17 is a timing chart showing speed changes of a main shaft and a driven shaft in a case where the main shaft is switched.
    FIG. 18 is a timing chart showing speed changes of a main shaft and a driven shaft in a case where the main shaft is inverted.

DESCRIPTION OF THE EMBODIMENTS

The embodiment of the invention will be described in detail with reference to the drawings. Identical or equivalent parts in the drawings are labeled with identical symbols and the descriptions thereof will not be repeated.

<A. Application Example>

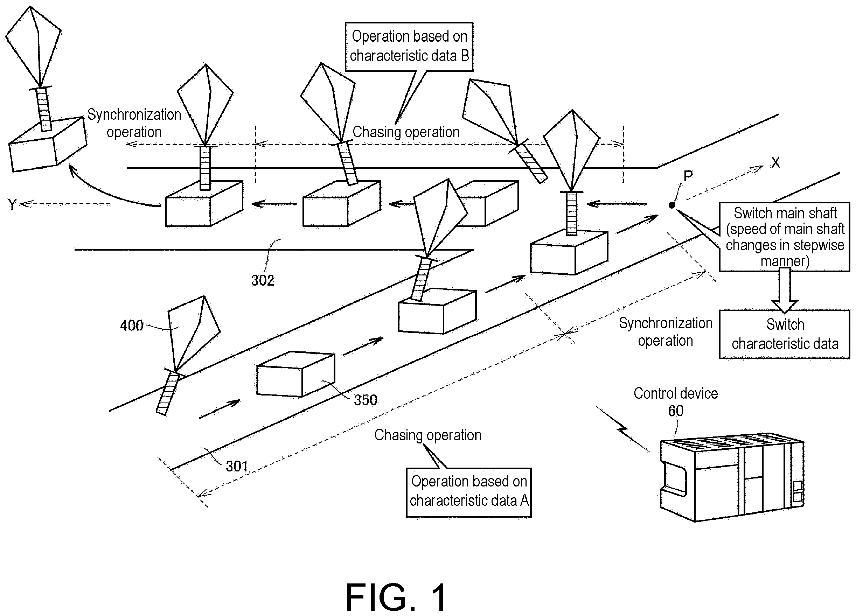

First of all, referring to FIG. 1, an example of a case for which the invention is suitable is described. FIG. 1 is a schematic view for illustrating an application example of a control device according to an embodiment. In the following, a programmable controller (PLC) is mainly assumed as an example of the control device.

A control device 60 of the embodiment may be suitable for a conveyance device, etc., in a production line or a logistics system for industrial products. For example, in the logistics system shown in FIG. 1, a plurality of types of conveying paths, such as a conveyor 301 which conveys a work 350 in the X-direction and a conveyor 302 which conveys the work 350 in the Y-direction, are provided. In the system, the conveying speeds of these conveying paths may be different from one another. In this example, the conveying speeds of the conveyor 301 and the conveyor 302 are different from each other.

The work 350 is conveyed by the conveyors 301 and 302 with conveying directions and conveying speeds different from each other. For example, after the work 350 is conveyed by the conveyor 301 in the X-direction, at a switching point P, the conveyor that conveys the work 350 is switched from the conveyor 301 to the conveyor 302, and, after the switching, the work 350 is conveyed by the conveyor 302 in the Y-direction.

A robot 400 follows the work 350 conveyed by the conveyors. The robot 400 chases the work 350 conveyed by the conveyor 301 that operates in advance, and when eventually catching up with the work 350, the robot 400 follows the work 350 while synchronizing with the operation of the conveyor 301.

When the conveyor conveying the work 350 is switched from the conveyor 301 to the conveyor 302, the robot 400 again chases the work 350 conveyed by the conveyor 302 that operates in advance, and when catching up with the work 350 again, the robot 400 follows the work 350 while synchronizing with the operation of the conveyor 302.

When the robot 400 follows the work 350 while synchronizing with the operation of the conveyor 302 in a predetermined period, the robot 400 grabs the work 350 with an arm not shown herein and carries the work 350 to a target place.

Accordingly, in the logistics system, the control device 60 executes motion control for controlling the operations of the conveyors 301 and 302 and the robot 400. Accordingly, the control device 60 realizes a "chasing operation", in which the robot 400 chases the work 350 conveyed by the conveyors 301, 302 that operate in advance, and a "synchronization operation", in which the robot 400 follows the work 350 while synchronizing with the operation of the conveyor 302.

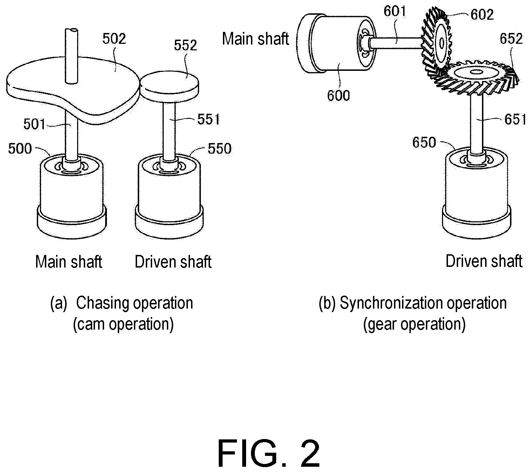

FIG. 2 is a schematic view for visually outlining motion control. In the example shown in FIG. 2, a motor 500 and a motor 600 correspond to the driving sources which operate the conveyors 301, 302 of FIG. 1. That is, a main shaft 501 of the motor 500 and a main shaft 601 of the motor 600 correspond to the shafts of the motors operating the conveyors 301, 302. In addition, a motor 550 and a motor 650 correspond to the driving sources which operate the robot 400 shown in FIG. 1. That is, a driven shaft 551 of the motor 550 or a driven shaft 651 of the motor 650 corresponds to the shaft of the motor operating the robot 400.

The chasing operation (cam operation) realized by motion control is described with reference to (a) of FIG. 2. As shown in (a) of FIG. 2, a cam 502 is fixed to the main shaft 501, which is the shaft of the motor 500, and rotates as the main shaft 501 rotates. In addition, a contact 552 in contact with the cam 502 is fixed to the driven shaft 551, which is the shaft of the motor 550, and rotates as the cam 502 rotates. According to such configuration, as the position (phase) of the main shaft 501 changes through the driving of the motor 500, a movement amount (displacement, rotation) of the driven shaft 551 changes.

The control device 60 stores characteristic data for specifying the movement amount of the driven shaft 551 with respect to the position of the main shaft 501 in advance responsive to the type of the main shaft 501. The control device 60 selects a suitable characteristic data responsive to the type of the main shaft 501 in operation, and determines the command speed with respect to the driven shaft 551 based on the selected characteristic data.

The synchronization operation (gear operation) realized by motion control is described with reference to (b) of FIG. 2. As shown in (b) of FIG. 2, a gear 602 is fixed to the main shaft 601, which is the shaft of the motor 600, and rotates as the main shaft 601 rotates. In addition, a gear 652 engaged with the gear 602 is fixed to the driven shaft 651, which is the shaft of the motor 650, and rotates as the gear 602 rotates. A gear ratio is determined from the tooth number of the gear 602 and the tooth number of the gear 652.

The control device 60 determines the command speed with respect to the driven shaft 651 by multiplying the speed of the main shaft 601 in operation by the gear ratio.

According to the example shown in FIG. 1, in the chasing operation in which the robot 400 chases the work 350 conveyed by the conveyor, the control device 60 determines the speed of the driven shaft of the robot 400 based on the characteristic data for specifying the movement amount of the driven shaft of the robot 400 with respect to the position of the main shaft of the conveyor, and controls the driven shaft of the robot 400 based on the determined speed.

In addition, in the synchronization operation in which the robot 400 follows the work 350 while synchronizing with the operation of the conveyor, by multiplying the speed of the main shaft of the conveyor by the gear ratio, the control device 60 determines the speed of the driven shaft of the robot 400, and controls the driven shaft of the robot 400 based on the determined speed.

Here, by switching the conveyor conveying the work 350 from the conveyor 301 to the conveyor 302, the speed of the main shaft may change in a stepwise manner. Specifically, when the main shaft that serves as the synchronization target of the shaft (driven shaft) of the motor driving the robot 400 is switched from the shaft (main shaft) of the motor driving the conveyor 301 to the shaft (main shaft) of the motor driving the conveyor 302, the speed of the main shaft changes in a stepwise manner.

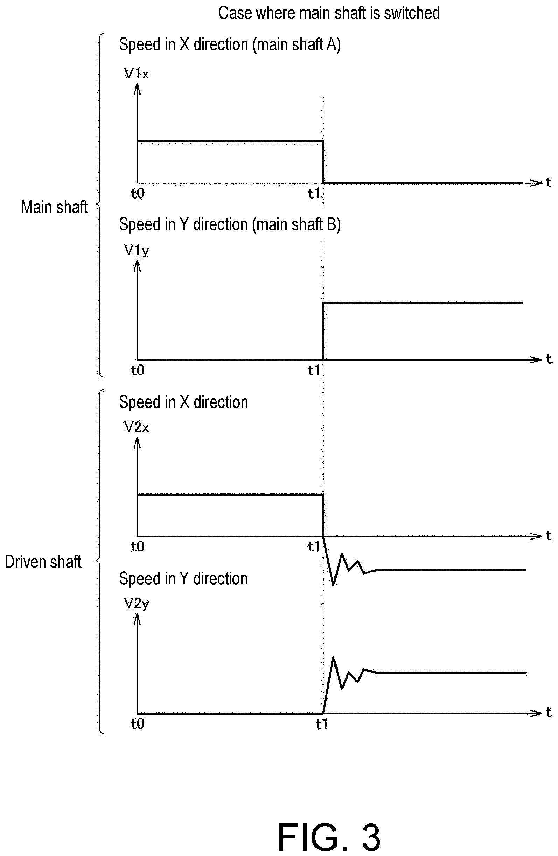

In the chasing operation or the synchronization operation, when the speed of the main shaft changes in a stepwise manner through the switching of the main shaft, there is a concern that a mechanical impact may be applied to the driven shaft following the main shaft. For example, FIG. 3 is a timing chart showing the speed changes of the main shaft and the driven shaft in the case where the main shaft is switched. In FIG. 3, an example of the case where the main shaft is switched in the synchronization operation is shown.

In FIG. 3, the vertical axis represents speed, and the horizontal axis represents time. In addition, the speed of a main shaft A conveying the work 350 in the X-direction is represented as V1x, and the speed of a main shaft B conveying the work 350 in the Y-direction is represented as V1y. The speed of the driven shaft in the case where the robot 400 is operated in the X-direction is represented as V2x, and the speed of the driven shaft in the case where the robot 400 is operated in the Y-direction is represented as V2y.

As shown in FIG. 3, in a time period from the timing t0 to the timing t1, since the main shaft A operates while the main shaft B does not operate, only the speed V1x of the main shaft A is generated. Regarding this, the driven shaft operates only in the X-direction at a speed obtained by multiplying the speed of the main shaft by the predetermined gear ratio.

Here, the main shaft is switched from the main shaft A to the main shaft B at the timing t1 (e.g., the timing when the work 350 arrives at a switching point P shown in FIG. 1). Since then, since the main shaft B operates while the main shaft A does not operate, only the speed V1y of the main shaft B is generated. Since the speed of the main shaft A and the speed of the main shaft B are different, by switching the main shaft from the main shaft A to the main shaft B, the speed of the main shaft changes in a stepwise manner. Moreover, since the operation direction of the main shaft A and the operation direction of the main shaft B are different, by switching the main shaft from the main shaft A to the main shaft B, the operation direction of the main shaft changes.

Regarding this, the operation direction of the driven shaft changes from the X-direction to the Y-direction and the speed of the driven shaft changes to a different speed in a stepwise manner, so as to follow the switching of the main shaft. As a result, there is a concern that a mechanical impact may be applied to the driven shaft as well as the robot 400 connected to the driven shaft, and the driven shaft or the robot 400 may vibrate. Therefore, for example, as shown in FIG. 3, right after the timing t1, a vibration in the opposite direction of the X-direction and a vibration in the Y-direction are generated with respect to the driven shaft.

It is noted that, while FIG. 3 shows an example of the case where the main shaft is switched in the synchronization operation, a vibration may also be generated in the driven shaft by changing the speed of the main shaft in a stepwise manner even in the case where the main shaft is switched in the chasing operation.

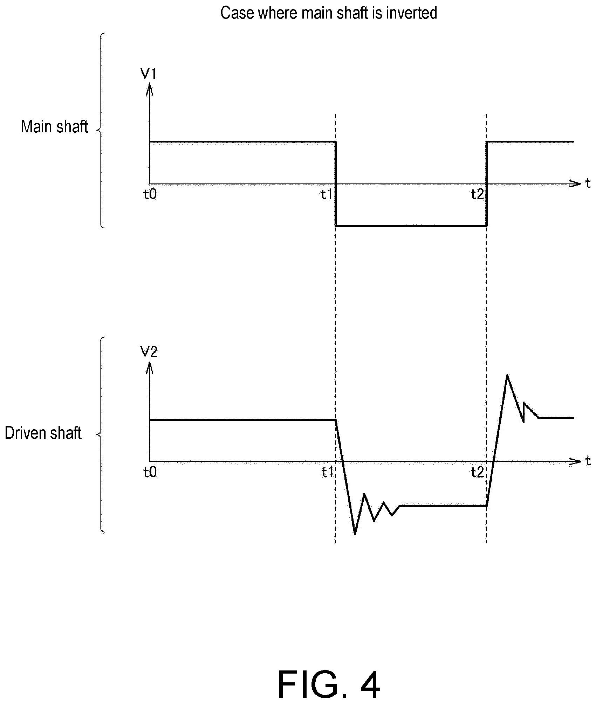

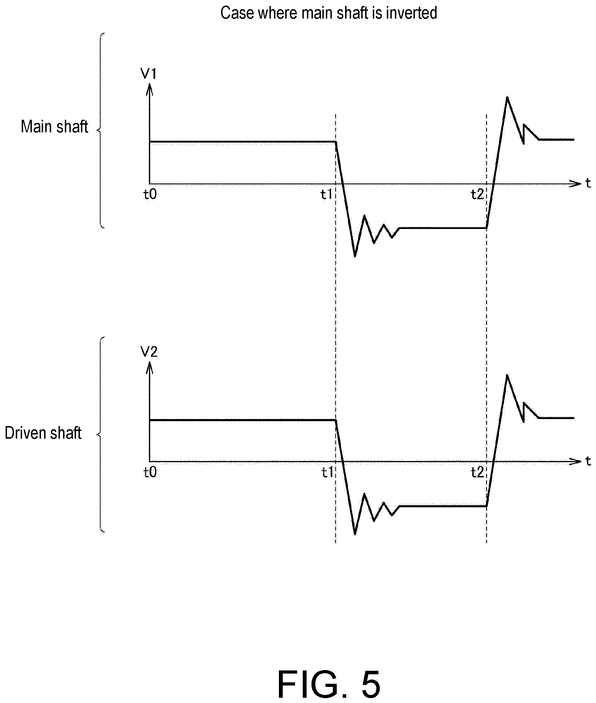

Besides, in the chasing operation or the synchronization operation, the inversion of the main shaft is also considered in addition to the switching of the main shaft. When the speed of the main shaft changes in a stepwise manner through the inversion of the main shaft, there is a concern that a mechanical impact may be applied to the driven shaft following the main shaft. For example, FIGs. 4 and 5 are timing charts showing the speed changes of the main shaft and the driven shaft in the case where the main shaft is inverted. In addition, in FIGs. 4 and 5, an example of the case where the main shaft is inverted in the synchronization operation is shown. Assuming that the example shown in FIG. 1 is adopted, the inversion of the main shaft is assumed to be the case where the main shaft is inverted to a direction opposite to the X-direction when the main shaft operates in the X-direction and the case where the main shaft is inverted to a direction opposite to the Y-direction when the main shaft operates in the Y-direction.

In FIGs. 4 and 5, the vertical axis represents speed, and the horizontal axis represents time. In addition, the speed of the main shaft conveying the work 350 in the X-direction or the Y-direction is represented as V1, and the speed of the driven shaft in the case where the robot 400 is operated in the X-direction or the Y-direction to follow the work 350 is represented as V2.

As shown in FIGs. 4 and 5, during the period from the timing t0 to the timing t1, the main shaft operates in a prescribed direction such as the X-direction or the Y-direction, etc. Regarding this, the driven shaft operates in the same direction as the main shaft at a speed obtained by multiplying the speed of the main shaft by the predetermined gear ratio.

Here, the main shaft is inverted at the timing t1. Since then, the speed of the main shaft changes to a -V1 direction opposite to the direction before the inversion, and the speed of the main shaft changes in a stepwise manner. In addition, since the main shaft is inverted, the operation direction of the main shaft is changed to the opposite direction. Then, the main shaft is inverted again at the timing t2. Since then, the speed of the main shaft is generated in a V 1 direction, which is opposite to the direction before the inversion, and the speed of the main shaft changes in a stepwise manner. In addition, since the main shaft is inverted, the operation direction of the main shaft is changed to the opposite direction.

Regarding this, the driven shaft is inverted and the speed of the driven shaft changes in a stepwise manner, so as to follow the inversion of the main shaft. As a result, there is a concern that a mechanical impact may be applied to the driven shaft as well as the robot 400 connected to the driven shaft, and the driven shaft or the robot 400 may vibrate. Therefore, for example, as shown in FIGs. 4 and 5, vibration is generated with respect to the driven shaft right after the timing t1 and right after the timing t2.

Moreover, as shown in FIG. 5, in the case where the main shaft is inverted, since vibration is generated with respect to the main shaft itself, with respect to the driven shaft following the main shaft, the vibration of the main shaft may still be generated as it is.

It is noted that, while FIGs. 4 and 5 show an example of the case where the main shaft is inverted in the synchronization operation, vibration may also be generated in the driven shaft by the changing of the speed of the main shaft in a stepwise manner even in the case where the main shaft is inverted in the chasing operation.

According to the above, in the case where the speed of the main shaft changes in a stepwise manner when the main shaft and the driven shaft are in operation, vibration may be generated in the driven shaft. Therefore, in the embodiment, in the case where the speed of the main shaft changes in a stepwise manner when the main shaft and the driven shaft are in operation, the control device 60 switches the characteristic data under selection to another characteristic data responsive to the speed change of the main shaft to make the driven shaft perform the chasing operation again.

For example, in the case of the example shown in FIG. 1, the control device 60 makes the driven shaft perform the chasing operation based on a characteristic data A among the characteristic data for specifying the movement amount of the driven shaft with respect to the position of the main shaft during the period in which the main shaft operates toward the X-direction. Then, when the main shaft is switched to the Y-direction at the switching point P during the period in which the synchronization operation is performed in the X-direction, the control device 60 this time makes the driven shaft perform the chasing operation based on a characteristic data B among the characteristic data.

Accordingly, the control device 60 can select the most suitable characteristic data responsive to the speed of the main shaft or the type of the main shaft from the characteristic data stored in advance and operate the driven shaft based on the selected characteristic data, thereby being able to output a suitable speed command value to the driven shaft. As a result, the vibration generated in the driven shaft can be suppressed.

The above describes the application example of the control device 60 according to the embodiment. In the following, the configuration and the process of the control device 60 according to the embodiment will be described in detail.

<B. System Configuration>

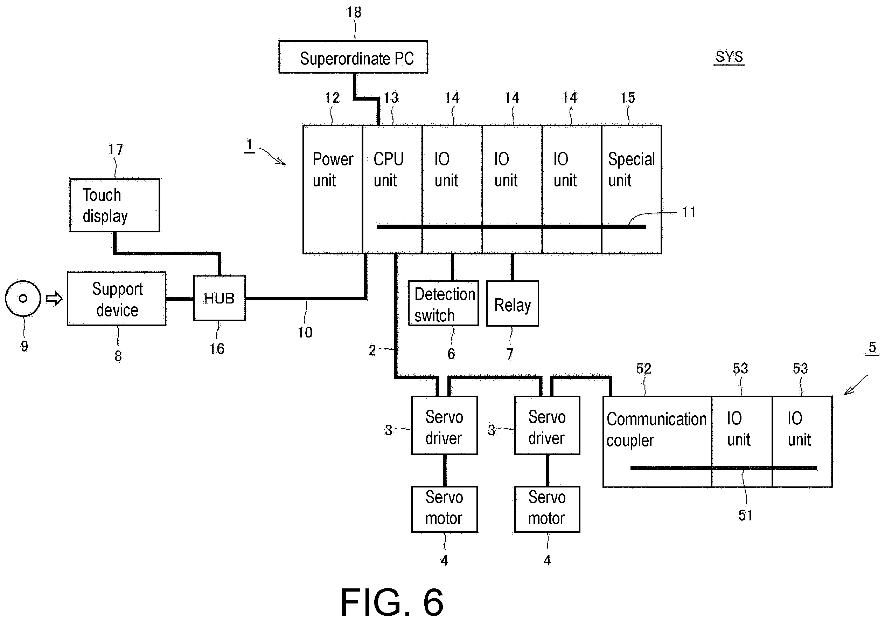

FIG. 6 is a schematic diagram illustrating a schematic configuration of a PLC system. As shown in FIG. 6, a PLC system SYS includes a PLC 1, a servo driver 3 connected with the PLC 1 via a field network 2, a remote IO terminal 5, and a detection switch 6 and a relay 7 as field machines. In addition, a touch display 17 and a support device 8 are connected to the PLC via a connection cable 10 and a hub 16.

The PLC 1 includes a CPU unit executing a main arithmetic process, one or more IO units 14, and a special unit 15. These units are configured to be able to exchange data with each other via a PLC system bus 11. In addition, these units are supplied with power with a suitable voltage by a power unit 12. The respective units configured as the PLC 1 are provided by a PLC manufacturer, so the PLC system bus 1 is normally independently developed and used by each PLC manufacturer. With respect to this, the specification, etc., of the field network 2 is often made public so that the products manufactured by different manufacturers can be connected with each other.

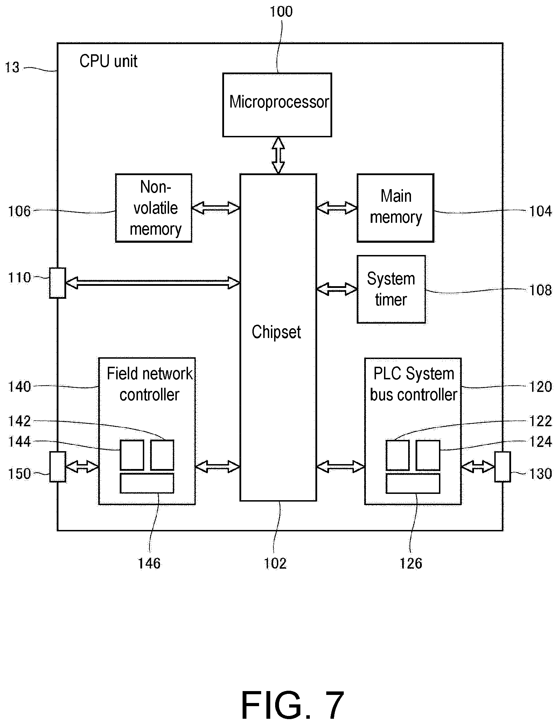

Details of the CPU unit 13 will be described in the following with reference to FIG. 7. The IO unit 14 is a unit relating to general input/output processes, and is responsible for input and output of binary data such as ON/OFF. That is, the IO unit 14 collects information on one of the state (ON) in which a sensor such as the detection switch 6, etc., detects some object and the state (OFF) in which a sensor such as the detection switch 6, etc., does not detect any object. In addition, the IO unit 14 outputs, with respect to an output destination such as the relay 7 or an actuator, etc., one of a command (ON) for activation and a command (OFF) for inactivation.

The special unit 15 is provided with a function not supported by the IO unit 14, such as input/output of analog data, temperature control, communication under a special communication method, etc.

The field network 2 transmits various data exchanged with the CPU unit 13. As the field network 2, typically, various industrial Ethernets (registered trademark) can be used. As the industrial Ethernet (registered trademark), for example, EtherCAT (registered trademark), Profinet IRT, MECHATROLINK (registered trademark)-III, Powerlink, SERCOS (registered trademark)-III, CIP Motion and the like are known. Any of these may be adopted. In the PLC system SYS of the embodiment, a typical configuration in which EtherCAT (registered trademark) is adopted as the field network 2 is described.

In the example shown in FIG. 6, the PLC system SYS having both the PLC system bus 11 and the field network 2 is described. However, a system configuration with only one of the PLC system bus 11 and the field network 2 may also be adopted. For example, all the units may be connected by the field network 2. Alternatively, the servo driver 3 may be directly connected with the PLC system bus 11 without using the field network 2. Further, the communication unit of the field network 2 may be connected to the PLC system bus 11 to perform communication from the CPU unit 13 to the machine connected to the field network 2 via the communication unit.

The servo driver 3 is connected to the CPU unit 13 via the field network 2 and drives a servo motor 4 according to a command value from the CPU unit 13. Specifically, the servo driver 3 receives command values, such as a position command value, a speed command value, a torque command value, from the PLC 1 at a prescribed interval. In addition, the servo driver 3 obtains actual values relating to the operation of the servo motor 4, such as position, speed (typically calculated from a difference between the current position and a previous position), and torque, from sensors, such as a position sensor (rotary encoder) and a torque sensor connected with the shaft (the main shaft or the driven shaft described above) of the servo motor 4. Then, the servo driver 3 sets the command value from the CPU unit 13 as a target value, and performs feedback control by using the actual value as a feedback value. That is, the servo driver 3 adjusts the current for driving the servo motor 4 so that the actual value approaches the target value. The servo driver 3 may also be referred to as a servo motor amplifier.

In addition, while FIG. 6 illustrates an example of a system in which the servo motor 4 and the servo driver 3 are combined, other configurations, such as a system in which a pulse motor and a pulse motor driver are combined, can also be adopted.

The field network 2 of the PLC system SYS is further connected with a remote IO terminal 5. The remote IO terminal 5 is generally like the IO unit 14, and performs processes relating to general input/output processes. Specifically, the remote IO terminal 5 includes a communication coupler 52 for performing a process relating to data transmission in the field network 2 and one or more IO units 53. These units are configured to be able to exchange data with each other via a remote IO terminal bus 51.

The CPU unit 13 controls a control target by referring to data provided by the touch display 17 or the support device 8 via the hub 16 and performing a predetermined process. The touch display 17 is a display which receives a data input operation by a user such as a designer or an operator of the PLC system SYS and is provided with a touch panel (not shown) which receives a touch operation input by the user.

As an example, the support device 8, which may be an integrated development environment is realized by executing a program by using hardware (e.g., general-purpose personal computer) following a general architecture. The support device 8 has an optical drive not shown herein, and reads and installs a computer readable program non-temporarily stored in a recording medium 9 (such as an optical recording medium like a digital versatile disc (DVD), etc.) from the recording medium 9 and installed.

While the various programs executed by the support device 8 may be installed via the recording medium 9, the programs may also be installed by means of downloading from a server device on a network.

The data provided from the support device 8 for the CPU unit 13 includes programs or parameters used at the time of controlling a control target. These data are created by the designer of the PLC system SYS, etc.

The program executed by the CPU unit 13 includes a user program and a system program. The user program is formed by combining commands arbitrarily created responsive to the control target, and can be arbitrarily created and corrected by the user. Typically, the user program includes program codes consisting of one or more commands described in accordance with the International Standard IEC 61131-3 set forth by the International Electrotechnical Commission (IEC).

With respect to this, the system program is an execution environment for executing the user program or a program for controlling hardware components including the CPU unit 13. Generally, the system program is installed to the CPU unit 13 in advance.

The CPU unit 13 is connected with a superordinate PC 18. The superordinate PC 18 has, for example, a database function, and collects event logs and the like output by the CPU unit 13 by exchanging necessary data with the CPU unit 13.

<C. Hardware Configuration of CPU unit>

Then, the hardware configuration of the CPU unit 13 will be described with reference to FIG. 7. FIG. 7 is a schematic diagram illustrating the hardware configuration of the CPU unit 13.

As shown in FIG. 7, the CPU unit 13 includes a microprocessor 100, a chipset 102, a main memory 104, a non-volatile memory 106, a system timer 108, a PLC system bus controller 120, a field network controller 140, and a USB connector 110. The chipset 102 is respectively bonded with other connectors via various buses.

Generally, the microprocessor 100 and the chipset 102 are configured according to a general purpose computer architecture. That is, the microprocessor 100 interprets and executes command codes successively provided from the chipset 102 according to the internal clock. The chipset 102 is connected with various components and exchanges internal data with the components, and generates necessary command codes in the microprocessor 100. In addition, the chipset 102 has a function of caching data obtained as the result of executing the arithmetic process in the microprocessor 100.

The CPU unit 13 is provided with the main memory 104 and the non-volatile memory 106 as a storage unit.

The main memory 104 is a volatile memory region (random access memory, RAM), and maintains various programs to be executed by the microprocessor 100 after power is provided to the CPU unit 13. In addition, the main memory 104 may also be used as a working memory when the microprocessor 100 executes the various programs. As such main memory 104, a device such as a dynamic random access memory (DRAM) or a static random access memory (SRAM) is used.

Meanwhile, the non-volatile memory 106 maintains data, such as a real-time operating system (OS), the system program of the PLC 1, the user program, a motion arithmetic program, system setting parameters, in a non-volatile manner. These programs or data are copied to the main memory 104, so as to be accessible by the microprocessor 100 where and when necessary. As such non-volatile memory 106, a semiconductor memory such as a flash memory can be used. Alternatively, a magnetic recording medium, such as a hard disc drive, or an optical recording medium such as a digital versatile disk random access memory (DVD-RAM) can also be used.

The system timer 108 generates an interrupt signal at a prescribed interval and provides the interrupt signal to the microprocessor 100. While the respective interrupt signals are typically generated at a plurality of different intervals according to hardware specifications, it can also be set that the interrupt signals are generated at arbitrary intervals according to the operating system (OS) or the basic input output system (BIOS). By using the interrupt signal generated by the system timer 108, the control operation of each motion control cycle to be described afterwards is realized.

The CPU unit 13 is provided with the system bus controller 120 and the field network controller 140 as a communication circuit.

The PLC system bus controller 120 controls data exchange via the PLC system bus 11. More specifically, the PLC system bus controller 120 includes a dynamic memory access (DMA) control circuit 122, a PLC system bus control circuit 124, and a buffer memory 126. The PLC system bus controller 120 is internally connected with the PLC system bus 11 via a PLC system bus connector 130.

The buffer memory 126 functions as a transmission buffer of data (referred to as "output data" in the following) output to other units via the PLC system bus 11 and as a reception buffer of data (referred to as "input data" in the following) input from other units via the PLC system bus 11. The output data created by the arithmetic process performed by the microprocessor 100 is originally stored in the main memory 104. Then, the output data to be transferred to a specific unit is read from the main memory 104 and temporarily maintained in the buffer memory 126. In addition, the input data transferred from other units is temporarily maintained in the buffer memory 126 and then moved to the main memory 104.

The DMA control circuit 122 transfers the output data from the main memory 104 to the buffer memory 126, and transfers the input data from the buffer memory 126 to the main memory 104.

The PLC system bus control circuit 124 performs a process of transmitting the output data of the buffer memory 126 and a process of receiving and storing the input data in the buffer memory 126 with other units connected with the PLC system bus 11. Typically, the PLC system bus control circuit 124 provides a function of a physical layer and a data link layer in the PLC system bus 11.

The field network controller 140 controls the data exchange via the field network 2. That is, the field network controller 140 controls the transmission of output data and the reception of input data according to the specification of the field network 2 that is used. The field network controller 140 includes a DMA control circuit 142, a field network control circuit 144, and a buffer memory 146. The field network controller 140 is internally connected with the PLC system bus 11 via a PLC system bus connector 150.

The DMA control circuit 142 transfers the output data from the main memory 104 to the buffer memory 146, and transfers the input data from the buffer memory 146 to the main memory 104.

The field network control circuit 144 performs a process of transmitting the output data of the buffer memory 146 and a process of receiving and storing the input data in the buffer memory 146 with other devices connected with the field network 2. Typically, the field network control circuit 144 provides a function of a physical layer and a data link layer in the field network 2.

The USB connector 110 is an interface for connecting the support device 8 and the CPU unit 13. Typically, a program, etc., executable by the microprocessor 100 of the CPU unit that is transferred from the support device 8 is taken into the PLC 1 via the USB connector 110.

<D. Software Configuration of CPU unit>

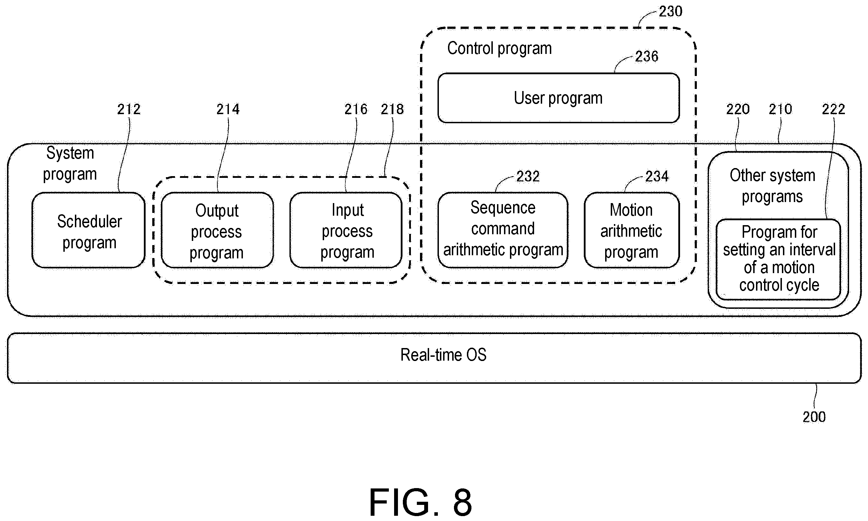

Then, the software groups providing the respective functions according to the embodiment are described with reference to FIG. 8. The command codes included in the software are read at a suitable timing and executed by the microprocessor 100 of the CPU unit 13. FIG. 8 is a schematic diagram illustrating a software configuration executed by the CPU unit 13.

As shown in FIG. 8, the software executed by the CPU unit 13 has three layers, i.e., a real-time OS 200, a system program 210, and a user program 236.

The real-time OS 200 is designed responsive to the computer architecture of the CPU unit 13, and provides a basic execution environment for the microprocessor 100 to execute the system program 210 and the user program 236. The real-time OS is typically provided by the PLC manufacturer or a dedicated software company, etc.

The system program 210 is a software group for providing the function as the PLC 1. Specifically, the system program 210 includes a scheduler program 212, an output process program 214, an input process program 216, a sequence command arithmetic program 232, a motion arithmetic program 234, and other system programs 220. Normally, the output process program 214 and the input process program 216 are executed successively (integrally), and these programs may also be generally referred to as an IO process program 218.

The user program 236 is created responsive to the control purpose of the user. That is, the user program 236 is a program arbitrarily designed responsive to a line (process) of a target and controlled by using the PLC system SYS.

The user program 236 cooperates with the sequence command arithmetic program 232 and the motion arithmetic program 234 to realize the control purpose of the user. That is, the user program 236 realizes the programmed operations by using the commands, functions, functional modules, etc., provided by the sequence command arithmetic program 232 and the motion arithmetic program 234. Therefore, the user program 236, the sequence command arithmetic program 232, and the motion arithmetic program 234 may also be generally referred to as a control program 230.

Accordingly, the microprocessor 100 of the CPU unit 13 executes the system program 210 and the user program 236 stored in the storage unit.

Then, the respective programs will be described in detail. The user program 236 is created responsive to the control purpose of the user (e.g., the line, process as the target), as described above. The user program 236 is typically in the form of an object program executable by the microprocessor 100 of the CPU unit 13. The user program 236 is generated by compiling a source program recorded in a ladder language, etc., in the support device 8, etc. Then, the user program 236 generated in the form of the object program is transferred from the support device 8 to the CPU unit 13 via the connection cable 10 and is stored in the non-volatile memory 106.

The scheduler program 212 controls a process start and a process re-start after the process is interrupted in each execution cycle with regard to the output process program 214, the input process program 216, and the control program 230. More specifically, the scheduler program 212 controls the execution of the user program 236 and the motion arithmetic program 234.

The output process program 214 reconfigures the output data generated by executing the user program 236 (the control program 230) in a form suitable to be transferred to the PLC system bus controller 120 and/or the field network controller 140. In a case where the PLC system bus controller 120 or the field network controller 140 needs an instruction for executing transmission from the microprocessor 100, the output process program 214 issues such an instruction.

The input process program 216 reconfigures the input data received by using the PLC system bus controller 120 and/or the field network controller 140 in a form suitable to be used by the control program 230.

The sequence command arithmetic program 232 is a program that is called when a sequence command used by the user program 236 is executed and is executed for realizing the contents of the command.

The motion arithmetic program 234 is a program that is executed according to an instruction of the user program 236 and calculates a command value output with respect to a motor driver referred to as the servo driver 3 or a pulse motor driver.

The other system programs 220 are those summing up the program groups for realizing various functions of the PLC 1 in addition to the programs individually shown in FIG. 8. The other system programs 220 include a program 222 for setting the interval of the motion control cycle.

The interval of the motion control cycle can be suitably set responsive to the control purpose. Typically, the information specifying the interval of the motion control cycle is input to the support device 8 by the user. Then, the input information is transferred from the support device 8 to the CPU unit 13. The program 222 for setting the interval of the motion control cycle stores the information from the support device 8 in the non-volatile memory 106, and sets the system timer 108 so that the interrupt signal is generated at the interval of the motion control cycle specified from the system timer 108. When power is provided to the CPU unit 13, by executing the program 222 for setting the interval of the motion control cycle, the information specifying the interval of the motion control cycle is read from the non-volatile memory 106, and the system timer 108 is set according to the read information.

The real-time OS provides an environment for switching and executing a plurality of programs over time.

<E. Overview of Motion Control>

Then, a typical configuration included in the user program 236 described above will be described in the following. The user program 236 includes a command of periodically determining whether a condition for starting control relating to a motor movement is satisfied. For example, the user program 236 includes a logic for determining whether a work (e.g., the work 350 shown in FIG. 1) to be treated is conveyed to a predetermined treatment position by the driving force of the motor. Then, the user program 236 further includes a command for starting motion control responsive to the condition for starting control being determined as satisfied. With the starting of the motion control, a motion command is instructed to be executed. Then, the motion arithmetic program 234 corresponding to the instructed motion command is started. Firstly, an initial process required for calculating the command value with respect to the motor in each execution of the motion arithmetic program 234 is executed. In addition, in the motion control cycle same as the initial process, the command value in the first cycle is calculated. Therefore, the initial process and the process of calculating the first command value are processes to be executed in the first execution of the motion arithmetic program 234 that is started. Then, the command values of the respective cycles are sequentially calculated.

<F. Configuration of Control Device>

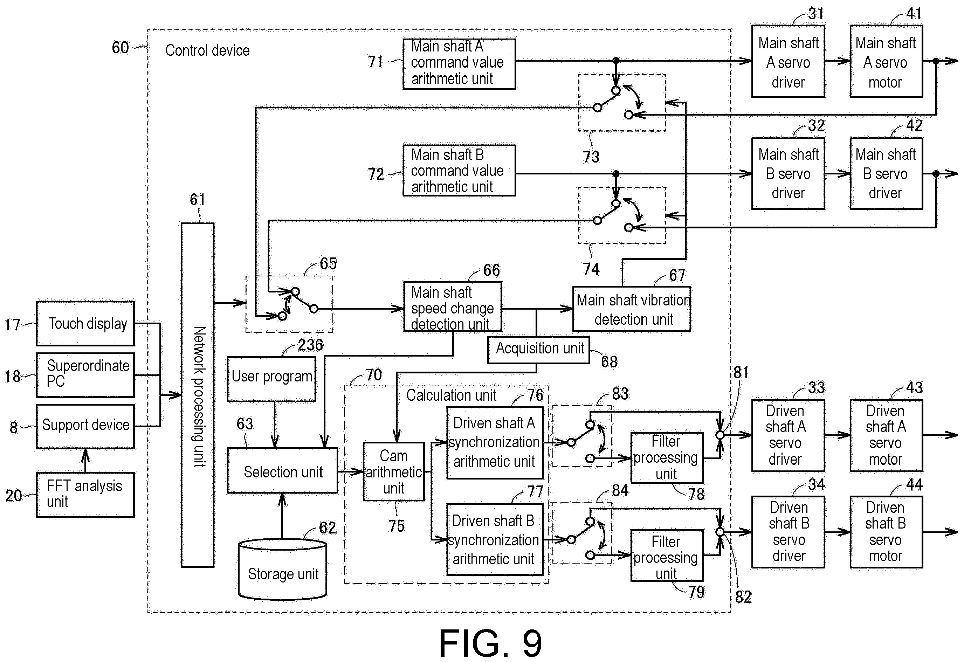

FIG. 9 is a schematic diagram illustrating a functional configuration of the control device 60. Here, an example in which the main shaft A and the main shaft B as the main shafts are controlled by the control device 60, and the driven shaft A and the driven shaft B as the driven shafts are controlled by the control device 60 is described. In addition, a main shaft A servo driver 31 and a main shaft A servo motor 41 are respectively the servo driver and the servo motor connected to the main shaft A and correspond to the servo driver 3 and the servo motor 4 shown in FIG. 6. In addition, a main shaft B servo driver 32 and a main shaft B servo motor 42 are respectively the servo driver and the servo motor connected to the main shaft B and correspond to the servo driver 3 and the servo motor 4 shown in FIG. 6. In addition, a driven shaft A servo driver 33 and a driven shaft A servo motor 43 are respectively the servo driver and the servo motor connected to the driven shaft A and correspond to the servo driver 3 and the servo motor 4 shown in FIG. 6. A driven shaft B servo driver 34 and a driven shaft B servo motor 44 are respectively the servo driver and the servo motor connected to the driven shaft B and correspond to the servo driver 3 and the servo motor 4 shown in FIG. 6.

As shown in FIG. 9, the control device 60 includes a network processing unit 61, a main shaft A command value arithmetic unit 71, a main shaft B command value arithmetic unit 72, a main shaft speed change detection unit 66, an acquisition unit 68, a main shaft vibration detection unit 67, a storage unit 62, a selection unit 63, a calculation unit 70, a filter processing unit 78, and a filter processing unit 79. These configuration elements are realized by the program 222 for setting the interval of the motion control cycle and the scheduler program 212, etc.

The network processing unit 61 is an interface connected with the touch display 17, the superordinate PC 18, and the support device 8 described with reference to FIG. 6.

The main shaft A command value arithmetic unit 71 outputs a speed command value with respect to the main shaft A servo driver 31. The main shaft A servo driver 31 drives the main shaft A servo motor 41 according to the speed command value from the main shaft A command value arithmetic unit 71. Accordingly, the main shaft A, which is the shaft of the main shaft A servo motor 41, operates (rotates) at a speed based on the speed command value from the control device 60.

The main shaft B command value arithmetic unit 72 outputs a speed command value with respect to the main shaft B servo driver 32. The main shaft B servo driver 32 drives the main shaft B servo motor 42 according to the speed command value from the main shaft B command value arithmetic unit 72. Accordingly, the main shaft B, which is the shaft of the main shaft B servo motor 42, operates (rotates) at a speed based on the speed command value from the control device 60.

The main shaft A command value arithmetic unit 71 and the main shaft B command value arithmetic unit 72 output the speed command values or stop outputting the speed command values based on at least one of the execution of the user program 236, the command from the touch display panel 17, the command from the support device 8, and the command from the superordinate PC 18. Accordingly, the main shaft is switched.

For example, under the condition that the speed command value is output from the main shaft A command value arithmetic unit 71 while the speed command value is not output from the main shaft B command value arithmetic unit 72, in the case where the condition is switched to the condition that the speed command value is not output from the main shaft A command value arithmetic unit 71 while the speed command value is output from the main shaft B command value arithmetic unit 72, the main shaft as the operation target is switched from the main shaft A to the main shaft B. In addition, under the condition that the speed command value is not output from the main shaft A command value arithmetic unit 71 while the speed command value is output from the main shaft B command value arithmetic unit 72, in the case where the condition is switched to the condition that the speed command value is output from the main shaft A command value arithmetic unit 71 while the speed command value is not output from the main shaft B command value arithmetic unit 72, the main shaft as the operation target is switched from the main shaft B to the main shaft A.

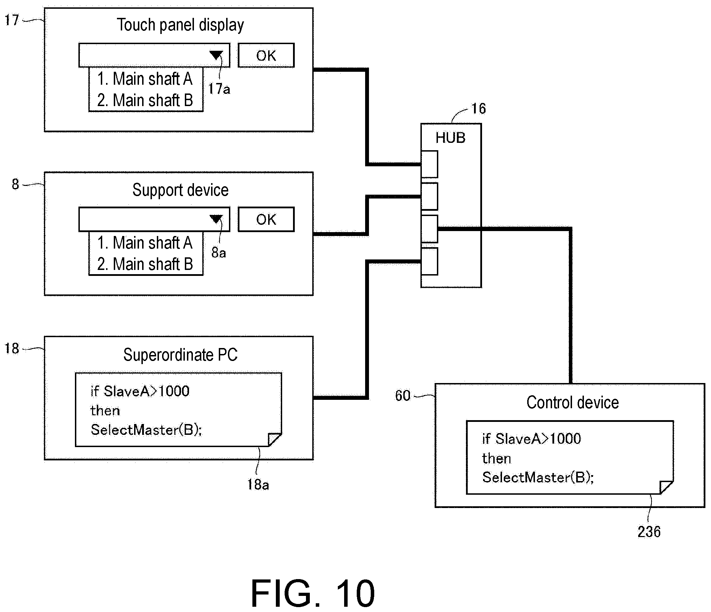

Here, FIG. 10 is a schematic view for illustrating switching of the main shaft. As shown in FIG. 10, the control device 60 is one realized by the CPU unit 13, and is respectively connected with the touch display 17, the support device 8, and the superordinate PC 18 via the hub 16. In the touch display 17, by operating a pull-down button 17a, one of the main shaft A and the main shaft B can be selected. Similarly, in the support device 8, by operating a pull-down button 8a, one of the main shaft A and the main shaft B can be selected.

Accordingly, by using the touch display 17 or the support device 8, the main shaft can be manually switched.

The superordinate PC 18 is configured to execute a program 18a for switching the main shaft when the switching condition is satisfied. For example, in the program 18a, in the case where the main shaft A (SlaveA) exceeds the value (1000) of a position corresponding to a target switching point (e.g., the switching point P shown in FIG. 1), the main shaft B (MasterB) is selected. Similarly, in the user program 236 which the control device 60 executes, in the case where the main shaft A (SlaveA) exceeds the value (1000) of a position corresponding to a target switching point (e.g., the switching point P shown in FIG. 1), the main shaft B (MasterB) is selected.

Accordingly, by executing the program by using the superordinate PC 18 or the control device 60, the main shaft can be automatically switched.

Referring to FIG. 9 again, the main shaft A command value arithmetic unit 71 can further output a speed command value for inverting the main shaft A based on at least one of the execution of the user program 236, the command from the touch display 17, the command from the superordinate PC 18, and the command from the support device 8. For example, if the speed command value output from the main shaft A command value arithmetic unit 71 is a speed having a speed vector opposite to the current speed of the main shaft A, the main shaft A is inverted. In addition, the main shaft B command value arithmetic unit 72 can also output a speed command value for inverting the main shaft B based on at least one of the execution of the user program 236, the command from the touch display 17, the command from the superordinate PC 18, and the command from the support device 8. For example, if the speed command value output from the main shaft B command value arithmetic unit 72 is a speed having a speed vector opposite to the current speed of the main shaft B, the main shaft B is inverted. Accordingly, the main shaft A command value arithmetic unit 71 and the main shaft B command value arithmetic unit 72 correspond to an embodiment of an "inverting unit" inverting the operation direction of the main shaft.

In the control device 60, a switching switch 73 that switches a detection path between a path for detecting the speed command value from the main shaft A command value arithmetic unit 71 and a path for detecting an output value from the main shaft A servo motor 41 as a feedback current value of the main shaft A is provided. In addition, in the control device 60, a switching switch 74 that switches a detection path between a path for detecting the speed command value from the main shaft B command value arithmetic unit 72 and a path for detecting an output value from the main shaft B servo motor 42 as a feedback current value of the main shaft B is provided.

The switching switch 73 and the switching switch 74 are respectively connected to a switching switch 65. The switching switch 65 switches a path to the main shaft speed change detection unit 66 between a path corresponding to the main shaft A and a path corresponding to the main shaft B based on at least one of the execution of the user program 236, the command from the touch display 17, the command from the superordinate PC 18, and the command from the support device 8. For example, in the case where the main shaft A operates while the main shaft B does not operate, the switching switch 65 connects the path corresponding to the main shaft A with the path to the main shaft speed change detection unit 66. In addition, in the case where the main shaft A does not operate while the main shaft B operates, the switching switch 65 connects the path corresponding to the main shaft B with the path to the main shaft speed change detection unit 66.

The main shaft speed change detection unit 66 detects the switching or inversion of the main shaft by detecting the speed change of the main shaft. Specifically, the main shaft speed change detection unit 66 determines whether the main shaft A is switched by determining whether the speed of the main shaft changes in a stepwise manner based on the speed command value from the main shaft A command value arithmetic unit 71 or the feedback current value from the main shaft A servo motor 41.

The determination on whether the speed of the main shaft changes in a stepwise manner may also be a determination on whether the change amount or the change rate of the speed of the main shaft exceeds a threshold. For example, in the case of determining the change rate of the speed of the main shaft, the following formula: V[t]/V[t-1] > α may be used. Here, V[t] is the speed of the main shaft at a moment t, and V[t-1] is the speed of the main shaft at a moment t-1. In addition, α is a threshold, and can be arbitrarily set according to the condition of a conveyance device, etc., suitable for the control device 60. For example, in the case of the example of FIG. 1, α may be set based on the moments of forces around the main shafts of the conveyor 301 and the conveyor 302. In addition, in the case of detecting that the switching switch 65 switches from the state of connecting with the path corresponding to the main shaft A to the state of connecting with the path corresponding to the main shaft B, the main shaft speed change detection unit 66 may determine that the main shaft is switched from the main shaft A to the main shaft B. In addition, in the case of detecting that the switching switch 65 switches from the state of connecting with the path corresponding to the main shaft B to the state of connecting with the path corresponding to the main shaft A, the main shaft speed change detection unit 66 may determine that the main shaft is switched from the main shaft B to the main shaft A.

Moreover, the main shaft speed change detection unit 66 determines whether the main shaft A is inverted based on the speed command value from the main shaft A command value arithmetic unit 71 or the feedback current value from the main shaft A servo motor 41. In addition, the main shaft speed change detection unit 66 determines whether the main shaft B is inverted by determining whether the speed of the main shaft changes in a stepwise manner based on the speed command value from the main shaft B command value arithmetic unit 72 or the feedback current value from the main shaft B servo motor 42.

The determination on whether the speed of the main shaft changes in a stepwise manner may also be a determination on whether the change amount or the change rate of the speed of the main shaft exceeds a threshold. For example, in the case of determining the change rate of the speed of the main shaft, the following formula: V[t]/V[t-1] > α as described above may be used. In addition, the main shaft speed change detection unit 66 may also determine whether the main shaft is inverted by using a symbol indicating a positive/negative sign in the case where the speed is expressed in binary. For example, the main shaft speed change detection unit 66 may determine that the main shaft is inverted to the positive direction of the speed vector if V[t-1]<0 and V[t]≧0, and determine that the main shaft is inverted to the negative direction of the speed vector if V[t-1]≧0 and V[t]<0.

The acquisition unit 68 acquires the current speed of the main shaft in each control interval. Specifically, the acquisition unit 68 acquires the current speed of the main shaft A based on the speed command value from the main shaft A command value arithmetic unit 71 or the feedback current value from the main shaft A servo motor 41, and outputs the acquired speed of the main shaft A to a cam arithmetic unit 75. In addition, the acquisition unit 68 acquires the current speed of the main shaft B based on the speed command value from the main shaft B command value arithmetic unit 72 or the feedback current value from the main shaft B servo motor 42, and outputs the acquired speed of the main shaft B to the cam arithmetic unit 75.

The main shaft vibration detection unit 67 detects the vibration of the main shaft. Specifically, the main shaft vibration detection unit 67 determines whether the speed of the main shaft A exceeds a predetermined upper limit or whether the speed of the main shaft A drops below a predetermined lower limit based on the speed command value from the main shaft A command value arithmetic unit 71 or the feedback current value from the main shaft A servo motor 41. In addition, the main shaft vibration detection unit 67 determines whether the speed of the main shaft B exceeds a predetermined upper limit or whether the speed of the main shaft B drops below a predetermined lower limit based on the speed command value from the main shaft B command value arithmetic unit 72 or the feedback current value from the main shaft B servo motor 42.

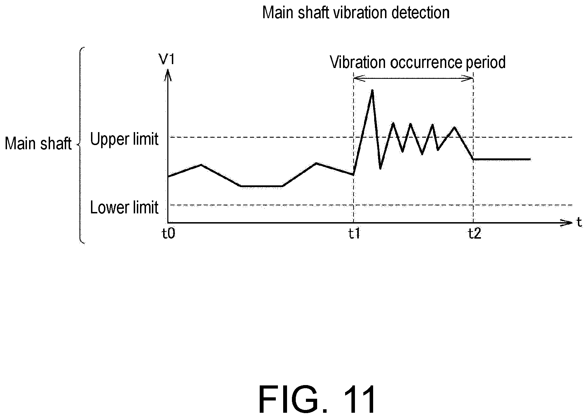

Here, FIG. 11 is a timing chart for illustrating vibration detection of the main shaft. The speed of the main shaft is ideally constant based on the speed command value, but, in detail, the speed varies slightly. Therefore, as shown in FIG. 11, in order to detect the variation of the speed of the main shaft due to vibration, the upper limit and the lower limit of the speed are set responsive to the type of the main shaft or the speed command value with respect to the main shaft. Then, in the case where the speed of the main shaft exceeds the upper limit or drops below the lower limit, that is, in the case where the absolute value of the speed of the main shaft exceeds the limit, the main shaft vibration detection unit 67 identifies the main shaft as vibrating. While the main shaft vibration detection unit 67 may identify the main shaft as vibrating in the case where the absolute value of the speed of the main shaft exceeds the limit once, the main shaft vibration detection unit 67 may also identify the main shaft as vibrating in the case where the number of times that the absolute value of the speed of the main shaft exceeds the limit within a predetermined period exceeds a predetermined limit on the number of times. In the example shown in FIG. 11, during a vibration occurrence period from the timing t1 to the timing t2, the number of times that the speed of the main shaft exceeds the upper limit exceeds the predetermined limit on the number of times. Accordingly, in such case, the main shaft vibration detection unit 67 determines that the main shaft is vibrating.

Referring to FIG. 9 again, in the case of determining that the main shaft is vibrating, the main shaft vibration detection unit 67 further switches the acquisition target of the acquisition unit 68 by switching the switching switch corresponding to the main shaft in operation between the switching switch 73 and the switching switch 74.

Specifically, in the case where the main shaft A is in operation, the switching switch 65 is connected with the side of the path corresponding to the main shaft A. In such case, if the main shaft A is not vibrating, the switching switch 73 is connected with the output of the main shaft A command value arithmetic unit 71. Accordingly, the acquisition unit 68 acquires the current speed of the main shaft A based on the speed command value from the main shaft A command value arithmetic unit 71. Alternatively, if the main shaft A is vibrating, the switching switch 73 is connected with the output of the main shaft A servo motor 41. Accordingly, the acquisition unit 68 acquires the current speed of the main shaft A based on the feedback current speed from the main shaft A servo motor 41.

In the case where the main shaft B is in operation, the switching switch 65 is connected with the side of the path corresponding to the main shaft B. In such case, if the main shaft B is not vibrating, the switching switch 74 is connected with the output of the main shaft B command value arithmetic unit 72. Accordingly, the acquisition unit 68 acquires the current speed of the main shaft B based on the speed command value from the main shaft B command value arithmetic unit 72. Alternatively, if the main shaft B is vibrating, the switching switch 74 is connected with the output of the main shaft B servo motor 42. Accordingly, the acquisition unit 68 acquires the current speed of the main shaft B based on the feedback current speed from the main shaft B servo motor 42.

The storage unit 62 stores cam data for realizing the chasing operation (cam operation) performed by the driven shaft. The cam data is the data for specifying the movement amount of the driven shaft with respect to the position of the main shaft. The storage unit 62 stores a plurality of types of cam data responsive to the types or speeds of the main shaft. The cam data is an embodiment of "characteristic data".

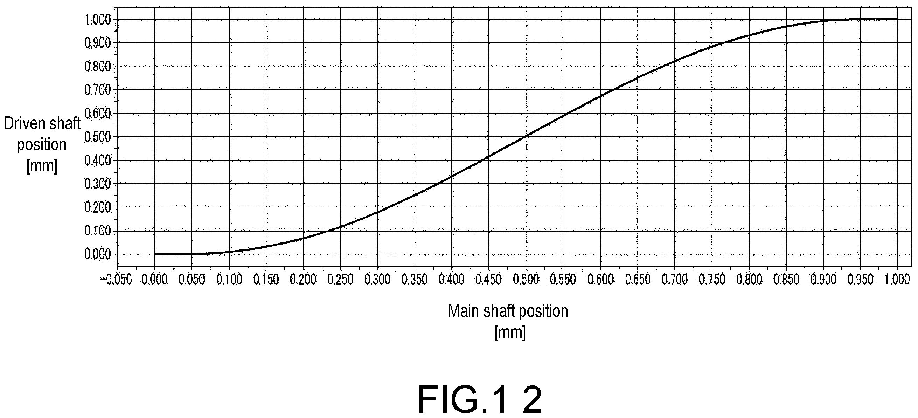

Here, FIG. 12 is a graph for illustrating a cam curve. The cam curve shown in FIG. 12 is one that illustrates one of a plurality of graph data stored in the storage unit 62.

In the cam curve shown in FIG. 12, the position of the main shaft is defined on the horizontal axis, and the position of the driven shaft is defined on the vertical axis. That is, the cam curve defines the position of the driven shaft in correspondence with the position of the main shaft. Regarding the positions of the main shaft and the driven shaft, the start position of the chasing operation is represented as 0.000 mm, and the start position of the synchronization operation is represented as 1.000 mm. The user can manually specify the start position of the synchronization operation by using the touch display 17 or the support device 8. Therefore, the cam curve changes responsive to the start position of the synchronization operation specified by the user. In addition, the user can change the range of the horizontal axis or the vertical axis in the cam curve or change the slope (the acceleration or deceleration of the driven shaft) by using the touch display 17 or the support device 8.

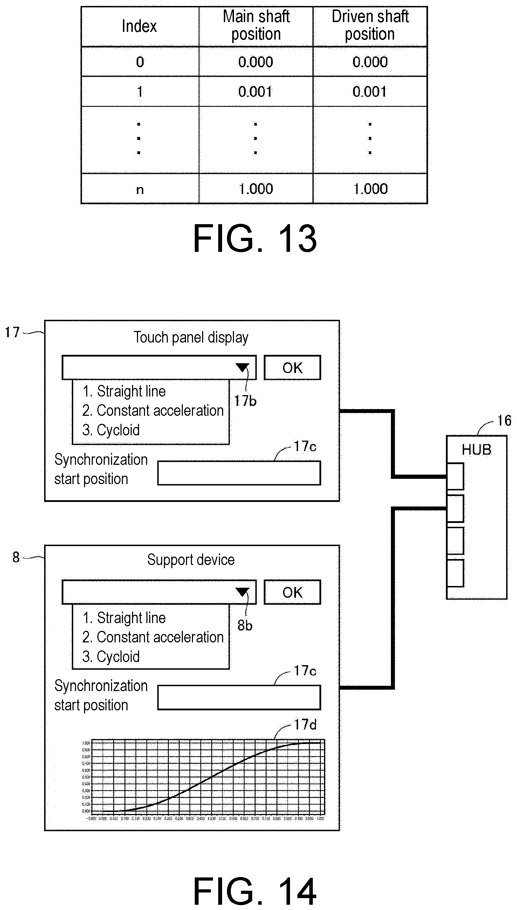

In the embodiment, the cam data is defined in the form of a data table. In the following, the data table in which the cam data is defined is referred to as a cam table. FIG. 13 is a diagram illustrating a data structure of a cam table.

As shown in FIG. 13, in the cam table, the data in which the position of the driven shaft corresponds to the position of the main shaft is stored. When linear interpolation is performed by using the data stored in the cam table, the cam curve shown in FIG. 12 is formed.

In the cam table, the target position of the driven shaft is defined in each predetermined interval (e.g., in a unit of 0.001) from 0.000, at which the position of the main shaft becomes the start position of the chasing operation, to 1.000, which is the start position of the synchronization position. In addition, an index number is assigned to each piece of data. By using such a cam table, the movement amount of the driven shaft with respect to the position of the main shaft can be specified. The storage unit 62 stores a plurality of cam tables like the cam table shown in FIG. 13 responsive to the types or speeds of the main shaft.

The cam data is not limited to being defined in the form of a data table, and may also be defined based on one of a linear expression and a polynomial expression. In the following, in the case where the cam data is expressed in a polynomial expression, the following expression may be used to express the movement amount of the driven shaft.

$$f(x) = ax^n + bx^{n-1} + cx^{n-2} + ...,$$

wherein "x" is the position of the main shaft, "n" is a constant number, and "a", "b", and "c" are coefficients.

In general, while straight lines, constant accelerations, and cycloids, etc., are known as cam curves, the user can choose the form of the cam curve by using the touch display 17 and the support device 8 in the embodiment. For example, FIG. 14 is a schematic view for illustrating switching of the cam curve.

As shown in FIG. 14, on the touch display 17, by operating a pull-down button 17b, one of a straight line, a constant acceleration, and a cycloid can be chosen as the cam curve. In addition, in the touch display 17, by inputting a synchronization start position in an event 17c, the synchronization start position can also be specified. Similarly, in the support device 8, by operating a pull-down button 8b, one of a straight line, a constant acceleration, and a cycloid can be chosen as the cam curve. In addition, in the support device 8, by inputting the synchronization start position in the event 17c, the synchronization start position can also be specified. In the support device 8, since a graph 17d of the cam curve is displayed, the user can visually set the cam curve.

Referring to FIG. 9 again, the selection unit 63 selects the cam data among the plurality of cam data stored in the storage unit 62, and outputs the selected cam data to the calculation unit 70.

The calculation unit 70 calculates the speed commanded with respect to the driven shaft as the speed command value. In the case where the driven shaft A is operated, the speed command value calculated by the calculation unit 70 is output from an output unit 81 to the driven shaft A servo driver 33. In the case where the driven shaft B is operated, the speed command value calculated by the calculation unit 70 is output from an output unit 82 to the driven shaft B servo driver 34.

The calculation unit 70 includes the cam arithmetic unit 75, a driven shaft A synchronization arithmetic unit 76, and a driven shaft B synchronization arithmetic unit 77.

The cam arithmetic unit 75 calculates a gear ratio to be multiplied by the command speed with respect to the driven shaft, and outputs the calculated gear ratio to the driven shaft A synchronization arithmetic unit 76 or the driven shaft B synchronization arithmetic unit 77. Specifically, in the case where the chasing operation is performed, the cam arithmetic unit 75 specifies the current position of the main shaft based on the current speed of the main shaft acquired by the acquisition unit 68 in each control interval. By referring to the cam data, the cam arithmetic unit 75 specifies the target position of the driven shaft corresponding to the current position of the main shaft. The cam arithmetic unit 75 specifies the movement amount in which the driven shaft should move in the next control interval from the difference between the current position of the driven shaft and the target position of the driven shaft specified based on the cam data. The cam arithmetic unit 75 calculates the gear ratio for operating the driven shaft in the specified movement amount in the next control interval. The cam arithmetic unit 75 outputs the gear ratio to the driven shaft A synchronization arithmetic unit 76 in the case of the chasing operation of the driven shaft A, while outputting the gear ratio to the driven shaft B synchronization arithmetic unit 77 in the case of the chasing operation of the driven shaft B.

In addition, the cam arithmetic unit 75 calculates a predetermined gear ratio determined in advance responsive to the current speed of the main shaft acquired by the acquisition unit 68 in each control interval in the case where the synchronization operation is performed. The cam arithmetic unit 75 outputs the predetermined gear ratio to the driven shaft A synchronization arithmetic unit 76 in the case of the synchronization operation of the driven shaft A, while outputting the predetermined gear ratio to the driven shaft B synchronization arithmetic unit 77 in the case of the synchronization operation of the driven shaft B.

The driven shaft A synchronization arithmetic unit 76 or the driven shaft B synchronization arithmetic unit 77 multiplies the current speed of the main shaft acquired by the acquisition unit 68 by the gear ratio acquired by the cam arithmetic unit 75 in each control interval to calculate the speed of the driven shaft, and outputs the speed command value indicating the speed to the driven shaft A servo driver 33 or the driven shaft B servo driver 34 via the output unit 81 or the output unit 82.

As described above, in the case where the main shaft vibration detection unit 67 does not detect the vibration of the main shaft, since the acquisition unit 68 acquires the speed of the main shaft based on the speed command value with respect to the main shaft, the driven shaft A synchronization arithmetic unit 76 and the driven shaft B synchronization arithmetic unit 77 calculate the speeds of the driven shafts based on the speed command value. Meanwhile, in the case where the main shaft vibration detection unit 67 detects the vibration of the main shaft, since the acquisition unit 68 acquires the speed of the main shaft based on the feedback current value of the main shaft, the driven shaft A synchronization arithmetic unit 76 and the driven shaft B synchronization arithmetic unit 77 calculate the speeds of the driven shafts based on the feedback current value. That is, in the case where the main shaft is not vibrating, the driven shaft synchronizes with the main shaft based on the speed command value with respect to the main shaft, and in the case where the main shaft is vibrating, the driven shaft synchronizes with the main shaft based on the feedback current value of the main shaft.

The filter processing unit 78 performs a filter process with respect to the speed command value of the driven shaft output from the driven shaft A synchronization arithmetic unit 76. Whether the filter processing unit 78 performs the filter process can be switched by a switching switch 83 provided at the output of the driven shaft A synchronization arithmetic unit 76. In the case where the filter processing unit 78 performs the filter process, the speed command value after the filter process is output to the driven shaft A servo driver 33.

The filter processing unit 79 performs a filter process with respect to the speed command value of the driven shaft output from the driven shaft B synchronization arithmetic unit 77. Whether the filter processing unit 79 performs the filter process can be switched by a switching switch 84 provided at the output of the driven shaft B synchronization arithmetic unit 77. In the case where the filter processing unit 79 performs the filter process, the speed command value after the filter process is output to the driven shaft B servo driver 34.

Here, the filter process is described. As described above, in the embodiment, in the case where the main shaft is switched or the main shaft is inverted, the cam data is switched by the selection unit 63 based on the user program 236. However, other than this, the user can also specify the cam data to be selected or switch the cam data under selection by using the touch display 17, the superordinate PC, and the support device 8.

Assuming the case where the cam data is switched to another cam data in the chasing operation, in the control interval in which the cam data is switched, the position of the driven shaft may change drastically. In particular, in the case where the positions of the driven shaft differ significantly between the cam table before the switching and the cam table after the switching, such situation may occur. In the case where the position of the driven shaft changes drastically, hunting may occur in the servo driver of the driven shaft. Accordingly, it is preferable that, in the control interval in which the cam data is switched, a filter process for smoothing the movement amount of the driven shaft is performed, so as to suppress the drastic change of the position of the driven shaft that occurs at the time of switching the cam data.

Specifically, the filter process is realized by a smoothing filter used by the microprocessor 100. It is preferable that the smoothing filter exhibits a low-pass characteristic for smoothing the drastic change of the position of the driven shaft. As a representative smoothing filter exhibiting the low-pass characteristic, examples include a first-order delay filter, a higher-order delay filter, a movement average filter.

In the case where the first-order delay filter is used, the following formula may be used as a transfer function G(s):

$$G(s) = 1/(T \times S + 1),$$

wherein "T" is a time constant. The larger the value of "T", the smoother the smoothing. A general low-pass filter exhibits the characteristic of delaying the phase of a signal. There is a trade-off between the degree of phase delay and the smoothness. In the case where the phase delay is to be eliminated after the cam data is switched, "T" needs to be set to be small.

An FFT analysis unit 20 is mounted in the support device 8. The FFT analysis unit 20 performs a frequency analysis on the inherent vibration frequency of the driven shaft by performing a fast Fourier transform. The support device 8 instructs the selection unit 63 so as to select the optimal cam data with which the resonance frequency is not excited based on the analysis result of the FFT analysis unit 20.

<G. Process of Control Device>

(Switching process in chasing operation)

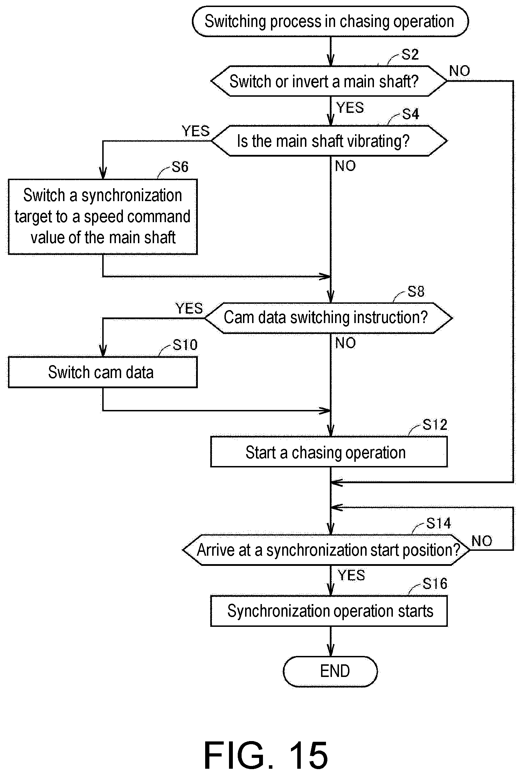

FIG. 15 is a flowchart showing a switching process in the chasing operation executed by the control device 60. As shown in FIG. 15, the control device 60 determines whether the main shaft is switched or whether the main shaft is inverted by using the main shaft speed change detection unit 66 (S2). The control device 60 proceeds to the process of S14 in the case where the main shaft is not switched and not inverted (NO in S2).

The control device 60 determines whether the main shaft is vibrating by using the main shaft vibration detection unit 67 (S4) in the case where the main shaft is switched or inverted (YES in S2). The control device 60 switches the synchronization target of the driven shaft from the feedback current value of the main shaft to the speed command value with respect to the main shaft (S6) and proceeds to the process of S8 in the case of determining that the main shaft is vibrating (YES in S4).

The control device 60 determines whether there is a switching instruction of the cam data (S8) in the case of determining that the main shaft is not vibrating (NO in S4) or after the process of S6. That is, the control device 60 determines whether there is an instruction of switching the cam data from one of the touch display 17, the superordinate PC, the support device 8, and the user program 236.

The control device 60 switches the cam data (S10) in the case where there is a switching instruction of the cam data (YES in S8). For example, in the case where the user program 236 provides the instruction of switching the cam data when the main shaft is switched or inverted, the control device 60 specifies another cam data responsive to the speed change of the main shaft from the plurality of cam data stored in the storage unit 62. Specifically, the control device 60 specifies the cam data corresponding to the speed of the main shaft after the switching in the case where the main shaft is switched, and specifies the cam data corresponding to the speed of the main shaft after the inversion in the case where the main shaft is inverted. Then, the control device 60 switches the cam data currently under selection to the specified cam data.

The control device 60 starts the operation for the driven shaft to chase the main shaft while referring to the cam data after the switching (S12) in the case where there is no switching instruction of the cam data (NO in S8) or after the process of S10. Then, the control device 60 determines whether the main shaft and the driven shaft have arrived at the synchronization start position (S14).

The control device 60 repeats the process of S14 again in the case where the main shaft and the driven shaft have not arrived at the synchronization start position (NO in S14). Meanwhile, the control device 60 starts the synchronization operation (S16) and ends the switching process in the chasing operation in the case where the main shaft and the driven shaft have arrived at the synchronization start position.

(Switching process in synchronization operation)

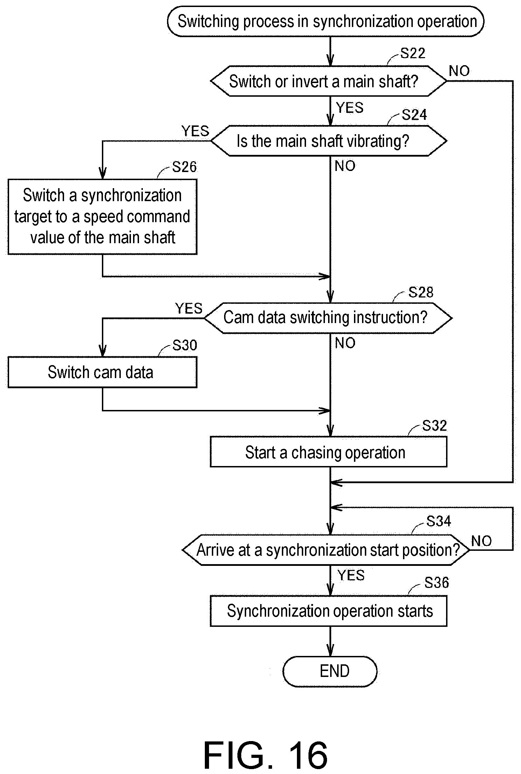

FIG. 16 is a flowchart showing a switching process in the synchronization operation executed by the control device 60. As shown in FIG. 16, the control device 60 determines whether the main shaft is switched or whether the main shaft is inverted by using the main shaft speed change detection unit 66 (S22). The control device 60 proceeds to the process of S34 in the case where the main shaft is not switched and not inverted (NO in S22).

The control device 60 determines whether the main shaft is vibrating by using the main shaft vibration detection unit 67 (S24) in the case where the main shaft is switched or inverted (YES in S22). The control device 60 switches the synchronization target of the driven shaft from the feedback current value of the main shaft to the speed command value with respect to the main shaft (S26) and proceeds to the process of S28 in the case of determining that the main shaft is vibrating (YES in S24).

The control device 60 determines whether there is a switching instruction of the cam data (S28) in the case of determining that the main shaft is not vibrating (NO in S24) or after the process of S26. That is, the control device 60 determines whether there is an instruction of switching the cam data from one of the touch display 17, the superordinate PC, the support device 8, and the user program 236.

The control device 60 switches the cam data (S30) in the case where there is a switching instruction of the cam data (YES in S28). For example, in the case where the user program 236 provides the instruction of switching the cam data when the main shaft is switched or inverted, the control device 60 specifies another cam data responsive to the speed change of the main shaft from the plurality of cam data stored in the storage unit 62. Specifically, the control device 60 specifies the cam data corresponding to the speed of the main shaft after the switching in the case where the main shaft is switched, and specifies the cam data corresponding to the speed of the main shaft after the inversion in the case where the main shaft is inverted. Then, the control device 60 switches the cam data currently under selection to the specified cam data.

The control device 60 starts the operation for the driven shaft to chase the main shaft while referring to the cam data after the switching (S32) in the case where there is no switching instruction of the cam data (NO in S28) or after the process of S30. Then, the control device 60 determines whether the main shaft and the driven shaft have arrived at the synchronization start position (S34).

The control device 60 repeats the process of S34 again in the case where the main shaft and the driven shaft have not arrived at the synchronization start position (NO in S34). Meanwhile, the control device 60 starts the synchronization operation (S36) and ends the switching process in the synchronization operation in the case where the main shaft and the driven shaft have arrived at the synchronization start position (YES in S34).

<H. Aspects of Speed Change>

(Case where the main shaft is switched)

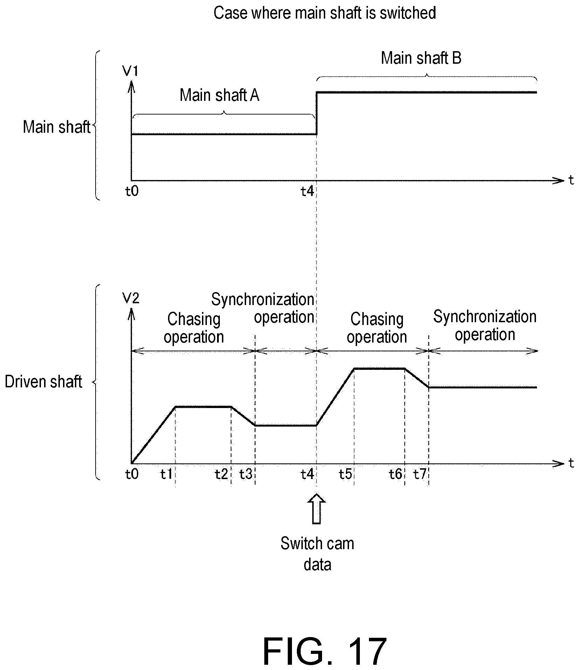

FIG. 17 is a timing chart showing speed changes of the main shaft and the driven shaft in the case where the main shaft is switched. In FIG. 17, the vertical axis represents speed, and the horizontal axis represents time. The speed of the main shaft is represented as V1, and the speed of the driven shaft is represented as V2. In FIG. 17, an example of the case where the main shaft is switched from the main shaft A to the main shaft B is shown.

As shown in FIG. 17, at the timing t0, the driven shaft starts the chasing operation for chasing the main shaft A. In the chasing operation, the driven shaft operates while accelerating or decelerating based on the speed command value determined based on the cam data. Specifically, the driven shaft accelerates in the period from the timing t0 to the timing t1, maintains at a fixed speed in the period from the timing t1 to the timing t2, and then decelerates in the period from the timing t2 to the timing t3, thereby arriving at the synchronization start position at the same timing with the main shaft A. Since the timing t3 after the arrival at the synchronization start position, the main shaft A and the driven shaft operate while synchronizing at a speed based on the predetermined gear ratio.

Here, at the timing t4, in the case where the main shaft is switched from the main shaft A to the main shaft B, the speed of the main shaft changes drastically in a stepwise manner. Therefore, the control device 60 selects, as the cam data serving as reference when the driven shaft operates to chase the main shaft B, the cam data corresponding to the speed of the main shaft B, and switches from the cam data under selection corresponding to the speed of the main shaft A to the selected cam data.

Then, at the timing t4, the driven shaft starts the chasing operation for chasing the main shaft B. The driven shaft accelerates in the period from the timing t4 to the timing t5, maintains at a fixed speed in the period from the timing t5 to the timing t6, and then decelerates in the period from the timing t6 to the timing t7, thereby arriving at the synchronization start position at the same timing with the main shaft B. Since the timing t7 after the arrival at the synchronization start position, the main shaft B and the driven shaft operate while synchronizing at a speed based on the predetermined gear ratio.

Accordingly, in the case where the speed of the main shaft changes in a stepwise manner due to the switching from the main shaft A to the main shaft B when the main shaft A and the driven shaft are in operation, since the cam data under selection responsive to the speed of the main shaft A is switched to the cam data responsive to the speed of the main shaft B, a suitable speed command value can be output to the driven shaft. As a result, the vibration generated in the driven shaft can be suppressed.

(Case where the main shaft is inverted)

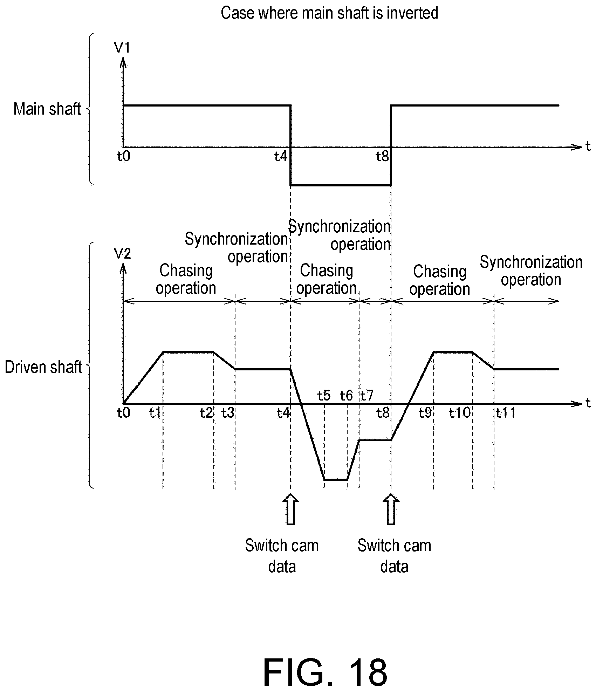

FIG. 18 is a timing chart showing speed changes of the main shaft and the driven shaft in the case where the main shaft is inverted. In FIG. 18, the vertical axis represents speed, and the horizontal axis represents time. The speed of the main shaft is represented as V1, and the speed of the driven shaft is represented as V2.

As shown in FIG. 18, at the timing t0, the driven shaft starts the chasing operation for chasing the main shaft B. In the chasing operation, the driven shaft operates while accelerating or decelerating based on the speed command value determined based on the cam data. Specifically, the driven shaft accelerates in the period from the timing t0 to the timing t1, maintains at a fixed speed in the period from the timing t1 to the timing t2, and then decelerates in the period from the timing t2 to the timing t3, thereby arriving at the synchronization start position at the same timing with the main shaft. Since the timing t3 after the arrival at the synchronization start position, the main shaft and the driven shaft operate while synchronizing at a speed based on the predetermined gear ratio.

Here, at the timing t4, in the case where the main shaft is inverted, the speed of the main shaft is turned to a -V1 direction opposite to the direction before the inversion, and the speed of the main shaft changes drastically in a stepwise manner. Therefore, the control device 60 selects, as the cam data serving as reference when the driven shaft operates to chase the main shaft again, the cam data corresponding to the speed of the main shaft after the inversion, and switches from the cam data under selection corresponding to the speed of the main shaft before the inversion to the selected cam data.

Then, at the timing t4, the driven shaft starts the chasing operation for chasing the main shaft. The driven shaft accelerates in a -V2 direction in the period from the timing t4 to the timing t5, maintains at a fixed speed in the period from the timing t5 to the timing t6, and then decelerates in the -V2 direction in the period from the timing t6 to the timing t7, thereby arriving at the synchronization start position at the same timing with the main shaft. Since the timing t7 after the arrival at the synchronization start position, the main shaft and the driven shaft operate while synchronizing at a speed based on the predetermined gear ratio.

Here, at the timing t8, in the case where the main shaft is inverted again, the speed of the main shaft is turned again to a V1 direction opposite to the direction before the inversion, and the speed of the main shaft changes drastically in a stepwise manner. Therefore, the control device 60 selects, as the cam data serving as reference when the driven shaft operates to chase the main shaft again, the cam data corresponding to the speed of the main shaft after the inversion, and switches from the cam data under selection corresponding to the speed of the main shaft before the inversion to the selected cam data.

Then, at the timing t8, the driven shaft starts the chasing operation for chasing the main shaft. The driven shaft accelerates in a V2 direction in the period from the timing t8 to the timing t9, maintains at a fixed speed in the period from the timing t9 to the timing t10, and then decelerates in the V2 direction in the period from the timing t10 to the timing t11, thereby arriving at the synchronization start position at the same timing with the main shaft. Since the timing t11 after the arrival at the synchronization start position, the main shaft and the driven shaft operate while synchronizing at a speed based on the predetermined gear ratio.

Accordingly, in the case where the speed of the main shaft changes in a stepwise manner due to the inversion of the main shaft when the main shaft and the driven shaft are in operation, since the cam data under selection responsive to the speed of the main shaft before the inversion is switched to the cam data responsive to the speed of the main shaft after the inversion, a suitable speed command value can be output to the driven shaft. As a result, the vibration generated in the driven shaft can be suppressed.

<I. Effects>

According to the above, in the embodiment, the control device 60 performs the synchronization operation of the driven shaft by outputting, as the speed command value, the speed obtained by multiplying the speed of the main shaft acquired in each control interval by the predetermined gear ratio and outputting the speed command value to the driven shaft. In addition, the control device performs the chasing operation of the driven shaft until the main shaft and the driven shaft arrive at the position at which the synchronization operation starts by specifying the movement amount of the driven shaft based on the position of the main shaft calculated from the speed of the main shaft acquired in each control interval and the cam data under selection and outputting, as the speed command value, the speed specified based on the movement amount to the driven shaft. Moreover, the control device 60 switches the cam data under selection to another cam data responsive to the speed change of the main shaft in the case where the speed of the main shaft changes in a stepwise manner when the main shaft and the driven shaft are in operation. Therefore, even in the case where the speed of the main shaft changes in a stepwise manner when the main shaft and the driven shaft are in operation, such as in the chasing operation or the synchronization operation, compared with keeping using the cam data under selection, the control device 60 can output a more suitable speed command value to the driven shaft. As a result, the vibration generated in the driven shaft can be suppressed. Moreover, in the case where the speed of the main shaft changes continuously instead of changing in a stepwise manner, the cam data under selection may be sufficient through making minor modification. However, in the case where the speed of the main shaft changes in a stepwise manner, switching to the suitable cam data prepared in advance can suppress the processing load.

Since the control device 60 can switch the main shaft based on an external command from the touch display 17, the support device 8, and the superordinate PC, etc., the convenience of the user is improved. In addition, since the control device 60 can switch the cam data under selection to the cam data responsive to such switching of the main shaft, the control device 60 can output a suitable speed command value to the driven shaft.

Since the control device 60 can invert the operation direction of the main shaft based on an external command from the touch display 17, the support device 8, and the superordinate PC 18, the convenience of the user is improved. In addition, since the control device 60 can switch the cam data under selection to the cam data responsive to such inversion of the main shaft, the control device 60 can output a suitable speed command value to the driven shaft.

In the control of the synchronization operation or the chasing operation, since the control device 60 can detect the speed command value with respect to the main shaft or the feedback current value of the main shaft as the speed of the detection target, the control device 60 can exert control responsive to the situation.

In the control of the synchronization operation or the chasing operation, in the case of detecting the vibration of the main shaft, since the control device 60 can switch the synchronization target from the speed command value with respect to the main shaft to the feedback current value of the main shaft, the operation of the driven shaft is not affected by the vibration of the main shaft.

Since the cam data can be defined based on at least one of a data table, a linear expression, and a polynomial expression, the cam data can be defined in various forms, and the convenience of the user is improved.

Since the control device 60 can select the cam data by taking into consideration the inherent vibration frequency of the driven shaft calculated by using the FFT analysis unit 20 to perform a fast Fourier transform, the control device 60 can suppress the vibration generated in the driven shaft.

In the above disclosure, the control device further includes the filter processing unit which smooths the movement amount of the driven shaft in the case where the selection unit switches the characteristic data when the speed of the main shaft in operation changes in a stepwise manner before the driven shaft arrives at the position where the synchronization operation starts.

Since the control device 60 can smooth the movement amount of the driven shaft in the cam data after the switching through the filter process in the case where the cam data under selection is switched when the speed of the main shaft in operation changes in a stepwise manner, the control device 60 can prevent the movement amount of the driven shaft from changing drastically due to the switching of the cam data.

Description of Symbols

2: Field network; 3, 31, 32, 33, 34: Servo driver; 4, 41, 42, 45, 44: Servo motor; 5: Terminal; 6: Detection switch; 7: Relay; 8: Support device; 9: Recording medium; 10: Connection cable; 11: System bus; 12: Power unit; 13: CPU unit; 14, 53: IO unit; 15: Special unit; 17: Touch display; 18: Program for setting an interval of a motion control cycle; 20: FFT analysis unit; 51: Terminal bus; 52: Communication coupler; 60: Control device; 61: Network processing unit; 62: Storage unit; 63: Selection unit; 65, 73, 74, 83, 84: Switching switch; 66: Main shaft speed change detection unit; 67: Main shaft vibration detection unit; 68: Acquisition unit; 70: Calculation unit; 71, 72: Command value arithmetic unit; 75: Cam arithmetic unit; 76, 77: Synchronization arithmetic unit; 78, 79: Filter processing unit; 81, 82: Output unit; 100: Microprocessor; 102: Chipset; 104: Main memory; 106: Non-volatile memory; 108: System timer; 110: Connector; 120: System bus controller; 122, 142: DMA control circuit; 124: System bus circuit; 126, 146: Buffer memory; 130, 150: System bus connector; 140: Field network controller; 144: Field network control circuit; 210, 220: System program; 212: Scheduler program; 214: Output process program; 216: Input process program; 218: Processing program; 222: Program for setting an interval of a motion control cycle; 230: Control program; 232: Sequence command arithmetic program; 234: Motion arithmetic program; 236: User program; 301, 302: Conveyor; 350: Work; 400: Robot;

500, 550, 600, 650: Motor; 501, 601: Main shaft; 502: Cam; 551, 651: Driven shaft; 552: Contact; 602, 652: Gear.

## Claims

1. A control device (60), synchronizing an operation of a driven shaft (551, 651) with respect to an operation of a main shaft (501, 601), the control device (60) comprising:

   an acquisition unit (68), acquiring a speed of the main shaft (501, 601) in each control interval;
   a storage unit (62), storing a plurality of characteristic data for specifying a movement amount of the driven shaft (551, 651) with respect to a position of the main shaft (501, 601);
   the control device (60) being **characterised by** a selection unit (63), selecting one characteristic data of the characteristic data;
   a calculation unit (70), calculating a speed commanded with respect to the driven shaft (551, 651) as a speed command value; and
   an output unit (81, 82), outputting the speed command value calculated by the calculation unit (70) to the driven shaft (551, 651),
   wherein the calculation unit (70)

   calculates a speed obtained by multiplying the speed of the main shaft (501, 601) acquired by the acquisition unit (68) by a predetermined ratio as the speed command value in a synchronization operation in which the operation of the driven shaft (551, 651) is synchronized with respect to the operation of the main shaft (501, 601), and before the driven shaft (551, 651) arrives at a position where the synchronization operation starts, specifies the movement amount of the driven shaft (551, 651) based on a position of the main shaft (501, 601) calculated from the speed of the main shaft (501, 601) acquired by the acquisition unit (68) and the characteristic data under selection by the selection unit (63), and calculates, as the speed command value, a speed specified based on the movement amount, and

   wherein in a case where the speed of the main shaft (501, 601) changes in a stepwise manner when the main shaft (501, 601) and the driven shaft (551, 651) are in operation, the selection unit (63) specifies another characteristic data responsive to the speed change of the main shaft (501, 601) from the characteristic data stored in the storage unit (62), and switches the characteristic data under selection to the another characteristic data.

2. The control device (60) as claimed in claim 1, wherein as the main shaft (501, 601), a first main shaft and a second main shaft operating at a speed in the stepwise manner different from the speed of the first main shaft are provided,

   the control device (60) further comprises a switching unit (65) which switches the main shaft (501, 601) from the first main shaft to the second main shaft based on an external command, and in a case where the main shaft (501, 601) is switched by the switching unit (65) when the main shaft (501, 601) and the driven shaft (551, 651) are in operation, the selection unit (63) switches the characteristic data under selection to another characteristic data responsive to the switching of the main shaft (501, 601) among the characteristic data.

3. The control device (60) as claimed in claim 1 or 2, wherein the control device (60) further comprises an inversion unit (71, 72) which inverts an operation direction of the main shaft (501, 601) based on an external command, and in a case where the inversion unit (71, 72) inverts the main shaft (501, 601) when the main shaft (501, 601) and the driven shaft (551, 651) are in operation, the selection unit (63) switches the characteristic data under selection to another characteristic data responsive to the inversion of the main shaft (501, 601) among the characteristic data.

4. The control device (60) as claimed in any one of claims 1 to 3, wherein the acquisition unit (68) acquires a speed commanded with respect to the main shaft (501, 601) or an actually measured speed of the main shaft (501, 601).

5. The control device (60) as claimed in claim 4, wherein the control device (60) further comprises a vibration detection unit (67) which detects vibration of the main shaft (501, 601), and in a case where the vibration detection unit (67) detects the vibration of the main shaft (501, 601), the acquisition unit (68) switches an acquisition target from the speed commanded with respect to the main shaft (501, 601) to the actually measured speed of the main shaft (501, 601).

6. The control device (60) as claimed in any one of claims 1 to 5, wherein the characteristic data are data defined based on at least one of a data table, a linear expression, and a polynomial expression.

7. The control device (60) as claimed in any one of claims 1 to 6, wherein the selection unit (63) selects the characteristic data based on an inherent vibration frequency of the driven shaft (551, 651) calculated through a fast Fourier transform.

8. The control device (60) as claimed in any one of claims 1 to 7, wherein the control device (60) further comprises a filter processing unit (78, 79) which, before the driven shaft (551, 651) arrives at the position where the synchronization operation starts, smooths the movement amount of the driven shaft (551, 651) in the case where the selection unit (63) switches the characteristic data when the speed of the main shaft (501, 601) in operation changes in the stepwise manner.

9. A control method for a control device (60) synchronizing an operation of a driven shaft (551, 651) with respect to an operation of a main shaft (501, 601), the control method comprising:

   a step for acquiring a speed of the main shaft (501, 601) in each control interval;
   a step for storing a plurality of characteristic data for specifying a movement amount of the driven shaft (551, 651) with respect to a position of the main shaft (501, 601);
   the control method being **characterised by**
   a step for selecting one characteristic data of the characteristic data;
   a step for calculating a speed commanded with respect to the driven shaft (551, 651) as a speed command value; and
   a step for outputting the speed command value calculated in the step of calculation to the driven shaft (551, 651),
   wherein in the step of calculation,

   a speed is obtained, as the speed command value, by calculating through multiplying the speed of the main shaft (501, 601) acquired in the step of acquisition by a predetermined ratio in a synchronization operation in which the operation of the driven shaft (551, 651) is synchronized with respect to the operation of the main shaft (501, 601), and before the driven shaft (551, 651) arrives at a position where the synchronization operation starts, the movement amount of the driven shaft (551, 651) is specified based on a position of the main shaft (501, 601) calculated from the speed of the main shaft (501, 601) acquired in the step of acquisition and the characteristic data under selection from the step of selection, and a speed specified based on the movement amount is calculated as the speed command value, and

   in the step of selection, in a case where the speed of the main shaft (501, 601) changes in a stepwise manner when the main shaft (501, 601) and the driven shaft (551, 651) are in operation, another characteristic data responsive to the speed change of the main shaft (501, 601) is specified from the characteristic data stored in the step of storage, and the characteristic data under selection is switched to the another characteristic data.

## Patentansprüche

1. Steuervorrichtung (60), die einen Betrieb einer angetriebenen Welle (551, 651) in Bezug auf einen Betrieb einer Hauptwelle (501, 601) synchronisiert, umfassend:

   eine Erfassungseinheit (68), die eine Drehzahl der Hauptwelle (501, 601) in jedem Steuerintervall erfasst;
   eine Speichereinheit (62), die eine Vielzahl von charakteristischen Daten zum Spezifizieren eines Bewegungsbetrags der angetriebenen Welle (551, 651) in Bezug auf eine Position der Hauptwelle (501, 601) speichert,
   wobei die Steuervorrichtung (60) **dadurch gekennzeichnet ist, dass** sie umfasst:

   eine Auswahleinheit (63), die charakteristische Daten von den charakteristischen Daten auswählt;
   eine Berechnungseinheit (70), die eine Drehzahl, die in Bezug auf die angetriebene Welle (551, 651) befohlen wird, als einen Drehzahlsollwert berechnet; und
   eine Ausgabeeinheit (81, 82), die den Drehzahlsollwert, berechnet von der Berechnungseinheit (70), an die angetriebene Welle (551, 651) ausgibt,
   wobei die Berechnungseinheit (70)

   eine Drehzahl, die durch Multiplizieren der Drehzahl der Hauptwelle (501, 601), erfasst von der Erfassungseinheit (68), mit einem vorbestimmten Verhältnis als den Drehzahlsollwert in einem Synchronisationsbetrieb berechnet, in dem der Betrieb der angetriebenen Welle (551, 651) in Bezug auf den Betrieb der Hauptwelle (501, 601) synchronisiert wird, und
   bevor die angetriebene Welle (551, 651) an einer Position ankommt, an der der Synchronisationsbetrieb beginnt, den Bewegungsbetrag der angetriebenen Welle (551, 651) basierend auf einer Position der Hauptwelle (501, 601) spezifiziert, die aus Drehzahl der Hauptwelle (501, 601), erfasst von der Erfassungseinheit (68) und den charakteristischen Daten unter Auswahl durch die Auswahleinheit (63) berechnet wird, und als den Drehzahlsollwert eine Drehzahl, spezifiziert basierend auf dem Bewegungsbetrag berechnet, und

wobei in einem Fall, in dem sich die Drehzahl der Hauptwelle (501, 601) schrittweise ändert, wenn die Hauptwelle (501, 601) und die angetriebene Welle (551, 651) in Betrieb sind, die Auswahleinheit (63) andere charakteristische Daten, die auf die Drehzahländerung der Hauptwelle (501, 601) reagieren, aus den charakteristischen Daten, die in der Speichereinheit (62) gespeichert sind, spezifiziert und die charakteristischen Daten, die zur Auswahl stehen, auf die anderen charakteristischen Daten umschaltet.

2. Steuervorrichtung (60) gemäß Anspruch 1, wobei als die Hauptwelle (501, 601) eine erste Hauptwelle und eine zweite Hauptwelle bereitgestellt sind, die bei einer von der Drehzahl der ersten Hauptwelle abweichenden Drehzahl schrittweise arbeitet,

die Steuervorrichtung (60) ferner eine Schalteinheit (65) umfasst, die die Hauptwelle (501, 601) basierend auf einem externen Befehl von der ersten Hauptwelle auf die zweite Hauptwelle schaltet, und
in einem Fall, in dem die Hauptwelle (501, 601) durch die Schalteinheit (65) geschaltet wird, wenn die Hauptwelle (501, 601) und die angetriebene Welle (551, 651) in Betrieb sind, die Auswahleinheit (63) die charakteristischen Daten, die zur Auswahl stehen, als Reaktion auf das Schalten der Hauptwelle (501, 601) unter den charakteristischen Daten auf andere charakteristische Daten schaltet.

3. Steuervorrichtung (60) gemäß Anspruch 1 oder 2, wobei die Steuervorrichtung (60) ferner eine Umkehreinheit (71, 72) umfasst, die eine Betriebsrichtung der Hauptwelle (501, 601) basierend auf einem externen Befehl umkehrt, und
in einem Fall, in dem die Umkehreinheit (71, 72) die Hauptwelle (501, 601) umkehrt, wenn die Hauptwelle (501, 601) und die angetriebene Welle (551, 651) in Betrieb sind, die Auswahleinheit (63) die auszuwählenden charakteristischen Daten auf andere charakteristische Daten als Reaktion auf die Umkehrung der Hauptwelle (501, 601) unter den charakteristischen Daten umschaltet.

4. Steuervorrichtung (60) gemäß einem der Ansprüche 1 bis 3, wobei die Erfassungseinheit (68) eine Drehzahl, die in Bezug auf die Hauptwelle (501, 601) oder eine tatsächlich gemessene Drehzahl der Hauptwelle (501, 601) befohlen wird, erfasst wird.

5. Steuervorrichtung (60) gemäß Anspruch 4, wobei die Steuervorrichtung (60) ferner eine Vibrationsdetektionseinheit (67) umfasst, die eine Vibration der Hauptwelle (501, 601) detektiert, und
in einem Fall, in dem die Vibrationsdetektionseinheit (67) die Vibration der Hauptwelle (501, 601) detektiert, die Erfassungseinheit (68) ein Erfassungsziel von der Drehzahl, die in Bezug auf die Hauptwelle (501, 601) befohlenen wird, auf die tatsächlich gemessene Drehzahl der Hauptwelle (501, 601) umschaltet.

6. Steuervorrichtung (60) gemäß einem der Ansprüche 1 bis 5, wobei die charakteristischen Daten Daten sind, die basierend auf wenigstens einem von einer Datentabelle, eines linearen Ausdrucks oder eines polynomischen Ausdrucks definiert sind.

7. Steuervorrichtung (60) gemäß einem der Ansprüche 1 bis 6, wobei die Auswahleinheit (63) die charakteristischen Daten basierend auf einer Eigenvibrationsfrequenz der angetriebenen Welle (551, 651) auswählt, die durch eine schnelle Fouriertransformation berechnet wird.

8. Steuervorrichtung (60) gemäß einem der Ansprüche 1 bis 7, wobei die Steuervorrichtung (60) ferner eine Filterverarbeitungseinheit (78, 79) umfasst, die, bevor die angetriebene Welle (551, 651) an der Position ankommt, an der der Synchronisationsbetrieb beginnt, den Bewegungsbetrag der angetriebenen Welle (551, 651) in dem Fall glättet, in dem die Auswahleinheit (63) die charakteristischen Daten umschaltet, wenn sich die Drehzahl der Hauptwelle (501, 601) im Betrieb schrittweise ändert.

9. Steuerungsverfahren für eine Steuervorrichtung (60), die einen Betrieb einer angetriebenen Welle (551, 651) in Bezug auf einen Betrieb einer Hauptwelle (501, 601) synchronisiert, wobei das Steuerungsverfahren umfasst:

einen Schritt zum Erfassen einer Drehzahl der Hauptwelle (501, 601) in jedem Steuerintervall;
einen Schritt zum Speichern einer Vielzahl von charakteristischen Daten zum Spezifizieren eines Bewegungsbetrags der angetriebenen Welle (551, 651) in Bezug auf eine Position der Hauptwelle (501, 601)
wobei das Steuerungsverfahren **dadurch ge-**

**kennzeichnet ist, dass** es umfasst:

einen Schritt zum Auswählen von charakteristischen Daten aus den charakteristischen Daten;

einen Schritt zum Berechnen einer Drehzahl, die in Bezug auf die angetriebene Welle (551, 651) als einen Drehzahlsollwert befohlen wird; und

einen Schritt zum Ausgeben des Drehzahlsollwert, der in dem Berechnungsschritt an die angetriebene Welle (551, 651) ausgegeben wird,

wobei in dem Schritt des Berechnens,

eine Drehzahl als der Drehzahlsollwert durch Berechnen durch Multiplizieren der Drehzahl der Hauptwelle (501, 601), die in dem Schritt des Erfassens erfasst wird, mit einem vorbestimmten Verhältnis in einem Synchronisationsbetrieb erhalten wird, in dem der Betrieb der angetriebenen Welle (551, 651) in Bezug auf den Betrieb der Hauptwelle (501, 601) synchronisiert wird, und

bevor die angetriebene Welle (551, 651) an einer Position ankommt, an der der Synchronisationsbetrieb beginnt, der Bewegungsbetrag der angetriebenen Welle (551, 651) basierend auf einer Position der Hauptwelle (501, 601) spezifiziert wird, die aus der Drehzahl der Hauptwelle (501, 601), die in dem Schritt der Erfassung erfasst wird, und den charakteristischen Daten unter Auswahl aus dem Schritt der Auswahl berechnet wird, und eine Drehzahl, die basierend auf dem Bewegungsbetrag spezifiziert wird, als der Drehzahlsollwert berechnet wird, und

in dem Schritt des Auswählens in einem Fall, in dem sich die Drehzahl der Hauptwelle (501, 601) schrittweise ändert, wenn die Hauptwelle (501, 601) und die angetriebene Welle (551, 651) in Betrieb sind, andere charakteristische Daten, als Reaktion auf die Drehzahländerung der Hauptwelle (501, 601), aus den charakteristischen Daten, die in dem Schritt des Speicherns gespeichert sind, spezifiziert werden, und die charakteristischen Daten, die der Auswahl unterliegen, auf die anderen charakteristischen Daten umgeschaltet werden.

**Revendications**

1. Dispositif de commande (60), synchronisant un fonctionnement d'un arbre entraîné (551, 651) avec un fonctionnement d'un arbre principal (501, 601), le dispositif de commande (60) comprenant :

une unité d'acquisition (68), acquérant une vitesse de l'arbre principal (501, 601) dans chaque intervalle de commande ;

une unité de stockage (62), stockant une pluralité de données caractéristiques pour spécifier une quantité de déplacement de l'arbre entraîné (551, 651) par rapport à une position de l'arbre principal (501, 601) :

le dispositif de commande (60) étant **caractérisé par**

une unité de sélection (63) sélectionnant une donnée caractéristique parmi les données caractéristiques ;

une unité de calcul (70), calculant une vitesse commandée par rapport à l'arbre entraîné (551, 651) en tant que valeur de commande de vitesse ; et

une unité de sortie (81, 82), délivrant la valeur de commande de vitesse calculée par l'unité de calcul (70) à l'arbre entraîné (551, 651),

dans lequel l'unité de calcul (70)

calcule une vitesse obtenue par la multiplication de la vitesse de l'arbre principal (501, 601) acquise par l'unité d'acquisition (68) par un taux prédéterminé en tant que la valeur de commande de vitesse dans un fonctionnement de synchronisation dans lequel le fonctionnement de l'arbre entraîné (551, 651) est synchronisé avec le fonctionnement de l'arbre principal (501, 601), et

avant que l'arbre entraîné (551, 651) n'arrive à une position à laquelle le fonctionnement de synchronisation commence, spécifie la quantité de déplacement de l'arbre entraîné (551, 651) sur la base d'une position de l'arbre principal (501, 601) calculée à partir de la vitesse de l'arbre principal (501, 601) acquise par l'unité d'acquisition (68) et de la donnée caractéristique qui est sélectionnée par l'unité de sélection (63), et calcule, en tant que la valeur de commande de vitesse, une vitesse spécifiée sur la base de la quantité de déplacement, et

dans lequel, dans un cas où la vitesse de l'arbre principal (501, 601) change d'une manière progressive lorsque l'arbre principal (501, 601) et l'arbre entraîné (551, 651) sont en fonctionnement, l'unité de sélection (63) spécifie une autre donnée caractéristique en réponse au changement de vitesse de l'arbre principal (501, 601) parmi les données caractéristiques stockées dans l'unité de stockage (62), et commute la donnée caractéristique qui est sélectionnée à l'autre donnée caractéristique.

2. Dispositif de commande (60) selon la revendication 1, dans lequel, en tant que l'arbre principal (501, 601), un premier arbre principal et un deuxième arbre principal fonctionnant à une vitesse de la manière progressive différente de la vitesse du premier arbre principal sont prévus,

le dispositif de commande (60) comprend en outre une unité de commutation (65) qui commute l'arbre principal (501, 601) du premier arbre principal au deuxième arbre principal sur la base d'une commande externe, et
dans un cas où l'arbre principal (501, 601) est commuté par l'unité de commutation (65) lorsque l'arbre principal (501, 601) et l'arbre entraîné (551, 651) sont en fonctionnement, l'unité de sélection (63) commute la donnée caractéristique qui est sélectionnée à une autre donnée caractéristique en réponse à la commutation de l'arbre principal (501, 601) parmi les données caractéristiques.

3. Dispositif de commande (60) selon la revendication 1 ou 2, dans lequel le dispositif de commande (60) comprend en outre une unité d'inversion (71, 72) qui inverse une direction de fonctionnement de l'arbre principal (501, 601) sur la base d'une commande externe, et
dans un cas où l'unité d'inversion (71, 72) inverse l'arbre principal (501, 601) lorsque l'arbre principal (501, 601) et l'arbre entraîné (551, 651) sont en fonctionnement, l'unité de sélection (63) commute la donnée caractéristique qui est sélectionnée à une autre donnée caractéristique en réponse à l'inversion de l'arbre principal (501, 601) parmi les données caractéristiques.

4. Dispositif de commande (60) selon l'une quelconque des revendications 1 à 3, dans lequel l'unité d'acquisition (68) acquiert une vitesse commandée par rapport à l'arbre principal (501, 601) ou une vitesse réellement mesurée de l'arbre principal (501, 601).

5. Dispositif de commande (60) selon la revendication 4, dans lequel le dispositif de commande (60) comprend en outre une unité de détection de vibration (67) qui détecte une vibration de l'arbre principal (501, 601), et
dans un cas où l'unité de détection de vibration (67) détecte la vibration de l'arbre principal (501, 601), l'unité d'acquisition (68) commute une cible d'acquisition de la vitesse commandée par rapport à l'arbre principal (501, 601) à la vitesse réellement mesurée de l'arbre principal (501, 601).

6. Dispositif de commande (60) selon l'une quelconque des revendications 1 à 5, dans lequel les données caractéristiques sont des données définies sur la base d'au moins l'une parmi une table de données, une expression linéaire et une expression polynomiale.

7. Dispositif de commande (60) selon l'une quelconque des revendications 1 à 6, dans lequel l'unité de sélection (63) sélectionne la donnée caractéristique sur la base d'une fréquence de vibration inhérente de l'arbre entraîné (551, 651) calculée par l'intermédiaire d'une transformée de Fourier rapide.

8. Dispositif de commande (60) selon l'une quelconque des revendications 1 à 7, dans lequel le dispositif de commande (60) comprend en outre une unité de traitement de filtre (78, 79) qui, avant que l'arbre entraîné (551, 651) n'arrive à la position à laquelle le fonctionnement de synchronisation commence, lisse la quantité de déplacement de l'arbre entraîné (551, 651) dans le cas où l'unité de sélection (63) commute la donnée caractéristique lorsque la vitesse de l'arbre principal (501, 601) en fonctionnement change de la manière progressive.

9. Procédé de commande pour un dispositif de commande (60) synchronisant un fonctionnement d'un arbre entraîné (551, 651) avec un fonctionnement d'un arbre principal (501, 601), le procédé de commande comprenant :

une étape d'acquisition d'une vitesse de l'arbre principal (501, 601) dans chaque intervalle de commande ;
une étape de stockage d'une pluralité de données caractéristiques pour spécifier une quantité de déplacement de l'arbre entraîné (551, 651) par rapport à une position de l'arbre principal (501, 601) ;
le procédé de commande étant **caractérisé par** une étape de sélection d'une donnée caractéristique parmi les données caractéristiques ;
une étape de calcul d'une vitesse commandée par rapport à l'arbre entraîné (551, 651) en tant que valeur de commande de vitesse ; et
une étape de sortie de la valeur de commande de vitesse calculée à l'étape de calcul à l'arbre entraîné (551, 651),

dans lequel, à l'étape de calcul,

une vitesse est obtenue, en tant que la valeur de commande de vitesse, par le calcul de multiplication de la vitesse de l'arbre principal (501, 601) acquise à l'étape d'acquisition par un taux prédéterminé dans un fonctionnement de synchronisation dans lequel le fonctionnement de l'arbre entraîné (551, 651) est synchronisé avec le fonctionnement de l'arbre principal (501, 601), et avant que l'arbre entraîné (551, 651) n'arrive à une position à laquelle le fonctionnement de synchronisation commence, la quantité de déplacement de l'arbre entraîné (551, 651) est spécifiée sur la base d'une position de l'arbre principal (501, 601) calculée à partir de la vitesse de l'arbre principal (501, 601) acquise à l'étape d'acquisition et de la donnée caractéristique qui est sélectionnée à l'étape de sélection, et une vitesse spécifiée sur la base de la quantité de déplacement est calculée en tant que la valeur de commande de vitesse, et

à l'étape de sélection, dans un cas où la vitesse de l'arbre principal (501, 601) change d'une manière progressive lorsque l'arbre principal (501, 601) et l'arbre entraîné (551, 651) sont en fonctionnement, une autre donnée caractéristique en réponse au changement de vitesse de l'arbre principal (501, 601) est spécifiée parmi les données caractéristiques stockées à l'étape de stockage, et la donnée caractéristique qui est sélectionnée est commutée à l'autre donnée caractéristique.

FIG. 1

502 552    Main shaft    601    602
                                              652
501                                           651
500          551
            550              600
                                        650

Main shaft    Driven shaft              Driven shaft

(a) Chasing operation          (b) Synchronization operation
    (cam operation)                (gear operation)

# FIG. 2

Case where main shaft is switched

Speed in X direction (main shaft A)

V1x

t0    t1    t

Main shaft

Speed in Y direction (main shaft B)

V1y

t0    t1    t

Speed in X direction

V2x

t0    t1    t

Driven shaft

Speed in Y direction

V2y

t0    t1    t

FIG. 3

Case where main shaft is inverted

FIG. 4

Case where main shaft is inverted

FIG. 5

FIG. 6

100

CPU unit

13

Microprocessor

Non-volatile memory

106

Main memory

104

110

System timer

108

Chipset

Field network controller

140

142
144

150

146

PLC System bus controller

120

122
124

130

102

126

# FIG. 7

FIG. 8

FIG. 9

EP 3 822 734 B1

FIG. 10

Main shaft vibration detection

FIG. 11

FIG.1 2

| Index | Main shaft position | Driven shaft position |
|:---:|:---:|:---:|
| 0 | 0.000 | 0.000 |
| 1 | 0.001 | 0.001 |
| . . . | . . . | . . . |
| n | 1.000 | 1.000 |

# FIG. 13

17

Touch panel display

OK

1. Straight line
2. Constant acceleration
3. Cycloid

17b

Synchronization start position

17c

16

HUB

8

Support device

OK

1. Straight line
2. Constant acceleration
3. Cycloid

8b

Synchronization start position

17c

17d

# FIG. 14

FIG. 15

FIG. 16

Case where main shaft is switched

FIG. 17

Case where main shaft is inverted

FIG. 18

**EP 3 822 734 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017033345 A
- JP 5803337 B
- JP 5325949 B
- US 2013033218 A1